# EUROPÄISCHE PATENTSCHRIFT

(11) **EP 3 533 309 B1**
(45) Veröffentlichungstag und Bekanntmachung des Hinweises auf die Patenterteilung: **07.04.2021**
(21) Anmeldenummer: 19160405.7
(22) Anmeldetag: 01.03.2019
(51) Int. Cl.: A01C 1/02, A01G 7/00, A01G 9/029, A01C 7/04, A01G 9/08

(54) **BEPROBUNGSVORRICHTUNG ZUM ANZIEHEN UND BEPROBEN VON KEIMLINGEN VON PFLANZEN**
SAMPLING DEVICE FOR PULLING AND SAMPLING SEEDLINGS OF PLANTS
DISPOSITIF D'ÉCHANTILLONNAGE POUR CULTIVER ET ÉCHANTILLONNER DES PLANTULES DE PLANTES

(30) Priorität: 02.03.2018 EP 18159836
(43) Veröffentlichungstag der Anmeldung: 04.09.2019
(73) Patentinhaber: KWS SAAT SE & Co. KGaA, 37574 Einbeck (DE)
(72) Erfinder: Strauß, Joachim, 37574 Einbeck (DE)

(56) Entgegenhaltungen:
- EP-A1- 3 289 856
- WO-A1-2012/096568
- AU-B2- 525 073
- DE-A1-102013 100 261
- FR-A1- 2 825 467
- US-A- 4 037 360
- US-A- 5 636 474
- US-A1- 2007 144 068

## Beschreibung

Die Erfindung betrifft eine Beprobungsvorrichtung zum Anziehen und Beproben von Keimlingen und Pflanzen mit einem Fußteil, und einer Schneideinrichtung zum Zertrennen von Keimlingen oberhalb der Wurzel, vorzugsweise im Bereich des Sprosses, besonders bevorzugt im Bereich des Hypokotyls. Ferner betrifft die Erfindung ein Verfahren zum Anziehen und Beproben von Keimlingen mit einer Beprobungsvorrichtung der eingangs genannten Art.

Beprobungsvorrichtungen der vorstehenden Art werden dazu verwendet Keimlinge von Pflanzen anzuziehen und anschließend zu beproben. Auf diese Weise kann Saatgut, insbesondere Samen, getestet werden, um beispielsweise bestimmte agronomische, physiologische, genetische, phänotypische oder morphologische Merkmale zu analysieren. Hierbei ist einerseits wichtig, dass die einzelnen Keimlinge voneinander getrennt sind, sodass keine Kontamination von Proben untereinander stattfindet. Zum anderen ist eine saubere Trennung der Keimlinge wichtig, auch um Bestandteile mit mütterlichen DNA von der Probe fernzuhalten. Insbesondere ist es wichtig, dass das Perikarp nicht mit in die Probe gelangt, um eine Kontamination der Probe zu verhindern.

Aus DE 10 2013 100 261 A1 ist ein System zum Ernten von biologischen Proben bekannt. Das System umfasst eine obere und untere Multiwell-Platte, die aufeinander gesetzt sind. Das Saatgut wird in die untere Multiwell-Platte gegeben und der Keimling wächst dann in die obere Multiwell-Platte hinein. Um eine Kontamination zu verhindern erstreckt sich die obere Multiwell-Platte teilweise in die untere Multiwell-Platte. Es ist also zum Trennen der Keimlinge erforderlich, dass die obere Multiwell-Platte angehoben wird um einen Spalt zwischen der oberen und unteren Multiwell-Platte zu bilden. Hierbei können die einzelnen Keimlinge leicht beschädigt werden und auch ist ein "Verwachsen" von einem Keimling in ein Tube der oberen Multiwell-Platte, dass für einen anderen Keimling vorgesehen ist, möglich. Weiterhin ist bei dem gezeigten System aus DE 10 2013 100 261 A1 die Nährstoffversorgung der Keimlinge aufwendig, da diese separat in den einzelnen Tubes der unteren Multiwell-Platte vorgenommen werden muss.

Ein anderes System ist aus WO 2012/096 568 A1 bekannt. Dort ist eine Beprobungsvorrichtung offenbart, die eine Stützplatte mit einer Mehrzahl an Pflanzen aufweist, die in einem Gitternetz angeordnet sind. Oberhalb der Pflanzen sind mehrere Scheiben angeordnet, die miteinander fluchtende Öffnungen aufweisen. Zum Zertrennen der einzelnen Keimlinge kann dann entweder eine dieser Scheiben herausgezogen werden, oder zwischen den Scheiben werden Messer durchgeführt. Bei dieser Vorrichtung besteht das Problem, dass Perikarp nicht abgestreift wird, und auch ein Zuordnen von getrennten Keimlingen zu einzelnen Gefäßen, beispielsweise Tubes, ist nicht ohne weiteres möglich. Das dort offenbarte System funktioniert gut für Sammelbeprobung, bei dem eine Einzelanalyse eines einzelnen Keimlings nicht erforderlich ist Weitere Beprobungsvorrichtungen sind offenbart in US 5 636 474 A und in der nachveröffentlichten EP 3 289 656 A1.

Aufgabe der vorliegenden Erfindung ist es, eine Beprobungsvorrichtung der eingangs genannten Art bereitzustellen, mit der eine einfache und zuverlässige Beprobung und ein homogenes Anziehen der Keimlinge möglich ist, vorzugsweise ohne dass eine permanente Pflege notwendig ist. Dabei soll möglichst sichergestellt werden, dass seitliches Verwachsen von Keimlingen nicht möglich ist und eine Probenkontamination weitestgehend verhindert ist.

Die Erfindung löst die Aufgabe bei einer Beprobungsvorrichtung gemäß Anspruch 1.

In einem bevorzugten Ausführungsbeispiel ist in der Schneideinrichtung das Schneidbrett-Unterteil und das Schneidbrett-Oberteil fest miteinander verbunden oder als ein einteiliges Element ausgebildet, wobei zum Zertrennen der Keimlinge zwischen dem Schneidbrett-Unterteil und Schneidbrett-Oberteil eine Schneide einschiebbar ist.

Das Schneidbrett-Unterteil dient einerseits dazu die einzelnen Keimlinge sicher voneinander zu trennen, sodass ein Verwachsen von Keimlingen verhindert werden kann. Hierzu sind die Durchlässe der ersten Mehrzahl an Durchlässen so ausgebildet, dass sie sich zum Schneidbrett-Oberteil hin verjüngen. Durch die Verjüngung der Durchlässe der ersten Mehrzahl an Durchlässen findet eine Führung der Keimlinge statt. Gleichzeitig wird durch die Verjüngung eine Einengung der Sprosse beim Wachsen erreicht, wodurch das Perikarp, das an den Sprossen anhaftet, abgestreift wird. Es ist entscheidend, dass das Perikarp unterhalb der Schneide, d.h. im Bereich des Fußteils oder Schneidbrett-Unterteils abgestreift wird.

Das Schneidbrett-Oberteil weist Durchlässe einer zweiten Mehrzahl an Durchlässen auf, die mit bzw. an den Durchlässen der ersten Mehrzahl an Durchlässen ausgerichtet sind. Vorzugsweise fluchten die Durchlässe der ersten Mehrzahl an Durchlässen mit den Durchlässen der zweiten Mehrzahl an Durchlässen. An wenigstens einem der Durchlässe der zweiten Mehrzahl an Durchlässen ist ein Positionierelement angeordnet, um einen Aufnahmebehälter zum Aufnehmen der abgetrennten Sprosse oder Sprossteile der Keimlinge auszurichten. Es kann vorgesehen sein, dass an jedem der Durchlässe der zweiten Mehrzahl an Durchlässen, oder einer Untermenge zum Beispiel bei jedem zweiten der Durchlässe der zweiten Mehrzahl an Durchlässen, ein Positionierelement angeordnet ist. Durch das Positionierelement wird ein definiertes Positionieren der Aufnahmebehälter zum Aufnehmen der abgetrennten Sprosse oder Sprossteile erreicht.

Grundsätzlich ist es beim Beproben von Keimlingen möglich überall entlang der Sprossachse (z.B. im Bereich des Hypokotyls) oder auch im Bereich der Blätter zu beproben. Hierfür ist dann eine Variation der Schnittebene erforderlich. Dies kann dadurch gelöst werden, dass ein Abstand zwischen Fußteil und Schneidbrett-Unterteil variiert wird, oder die Höhe des Schneidbrett-Unterteils variiert wird.

Als Spross wird vorliegend der aus Sprossachse und Blättern bestehende, meist oberirdisch wachsenden, Teil des Kormus verstanden. Unter Hypokotyl wird vorliegend der unterste Abschnitt der Sprossachse einer Samenpflanze vom Wurzelhals bis zu den Kotyledonen verstanden.

Ist die Beprobungsvorrichtung so ausgebildet, dass das Schneidbrett-Unterteil und das Schneidbrett-Oberteil zum Zertrennen der Keimlinge gegeneinander verschiebbar sind, kann vorgesehen sein, dass zwischen diesen ein Trennelement eingeschoben werden kann, um eine Kontamination zu verhindern. Das Trennelement kann grundsätzlich ähnlich der Schneide ausgebildet sein. Diese Variante eignet sich insbesondere bei Keimlingen, die keine besonders harte Sprossachse aufweisen.

In einer ersten bevorzugten Ausführungsform weist die Beprobungsvorrichtung einen Keimträger für Samen oder Keimlinge auf, der zwischen dem Fußteil und der Schneideinrichtung angeordnet ist und aus einem saugfähigen Material zum Speichern von Flüssigkeit gebildet ist Der Keimträger weist vorzugsweise eine dritte Mehrzahl an Vertiefungen auf, wobei Zentralachsen der dritten Mehrzahl an Vertiefungen mit der ersten Mehrzahl an Durchlässen fluchten. Die Vertiefungen sind vorzugsweise dazu ausgebildet Samen oder Keimlinge aufzunehmen. Vorzugsweise sind die Vertiefungen in einem 24er-Well-Format, einem 48er-Well-Format, einem 96er-Well-Format, einem 192er-Well-Format oder einem 384er-Well-Format angeordnet. Die Auswahl des entsprechenden Formats ist abhängig von der Größe der auszulegenden Samen und/oder von der Anzahl der zu beprobenden Keimlinge und kann je nach Anwendung ausgewählt werden. Vorzugsweise weist der Keimträger etwa 1 bis 400 Vertiefungen auf.

Die einzelnen Vertiefungen sind vorzugsweise voneinander separiert. Vorzugsweise ist der Keimträger so ausgebildet, dass ein seitliches Verwachsen von Keimlingen verhindert ist. Die Vertiefungen in dem Keimträger sind vorzugsweise so ausgebildet, dass die Keimlinge nur gerade nach oben wachsen können, in den entsprechenden Durchlass der ersten Mehrzahl an Durchlässen im Schneidbrett-Unterteil hinein. Hierdurch kann sichergestellt werden, dass ein Keimling aus einer Vertiefung des Keimträgers nicht in einen benachbarten Durchlass der ersten Mehrzahl an Durchlässen hineinwachsen kann. Hierdurch kann sichergestellt werden, dass die einzelnen Proben sich nicht gegenseitig kontaminieren.

Weiterhin ist bevorzugt, dass der Keimträger ein Material aus Altpapier oder Zellstoff aufweist oder aus diesem gebildet ist. Hierzu gehören auch Pappe und Kartonage. Altpapiermaterial eignet sich besonders, da es einerseits aus ökologischen Gründen bevorzugt ist, andererseits ist das Material saugfähig. Die genannten Materialien haben darüber hinaus die Vorteile, dass sie kostengünstig sind, sich leicht formen lassen und den Gasaustausch während der Keimung ermöglichen. Das Altpapiermaterial kann auch durch ein anderes saugfähiges Material ersetzt werden. Das Material des Keimträgers kann eine Dicke von 0,5 mm bis 5 mm, bevorzugt von 1 mm bis 2 mm haben, besonders bevorzugt von 1,2 mm bis 1,5 mm. Als bevorzugt hat sich eine Dichte im Bereich von 0,2 g/cm³ bis 0,7 g/cm³ herausgestellt. Besonders bevorzugt liegt die Dichte etwa im Bereich von 0,3 g/cm³ bis 0,4 g/cm³. Die Saugfähigkeit des Materials des Keimträgers sollte so ausgewählt sein, dass dieser bei Aussaat gewässert wird und bis zur Beprobung der Keimlinge ausreichend Flüssigkeit speichert bzw. den wachsenden Keimlingen bereitstellt. Ein typischer Zeitrahmen liegt bis zur Beprobung zwischen ein bis zehn Tagen, beispielsweise für Keimlinge von *Beta* sp., insbesondere *Beta vulgaris,* bei etwa fünf bis sieben Tagen oder für Keimlinge von *Brassica* sp., insbesondere *Brassica napus,* bei etwa 4 bis 5 Tagen.

In einer bevorzugten Ausgestaltung der vorliegenden Erfindung sind die Aufnahmebehälter als einseitig offene Laborröhrchen (Tubes) ausgebildet und in einem Halter (Rack) mit ihrer Öffnung proximal zum Schneidbrett-Oberteil gehalten. Die Aufnahmebehälter sind vorzugsweise derart dimensioniert, dass die Keimlinge einwachsen können, ohne dass sie an die Unterseite der Aufnahmebehälter über längere Zeit, beispielsweise mehr als einem Tag, anliegen. Dies würde einen möglichen Pilzbefall deutlich begünstigen. Zudem verhindert dies auch, dass die beprobten Sprosse oder Sprossteile später aus den Aufnahmebehältern herausragen, was ein Verschließen deutlich erleichtert, da hierbei überstehende Sprosse oder Sprossteile von dem Verschluss nicht erfasst bzw. gequetscht werden. Ein besonders bevorzugtes Tube-Rack ist das FluidX der Fa. Brooks Life Science Systems, Großbritannien. Möglich sind auch Deepwell-Boxen, die keine Einzeltubes haben. Auf diese Weise können die Keimlinge direkt in die Tubes hineinwachsen. In der Regel sind die Tubes mit ihrer Öffnung nach unten auf das Schneidbrett-Oberteil aufgesetzt, so dass die Keimlinge von unten in die Öffnung der Tube hineinwachsen. Wird nun die Schneide eingeführt oder das Schneidbrett-Oberteil gegen das Schneidbrett-Unterteil verschoben, um die Keimlinge zu zertrennen, verbleibt der abgetrennte Spross oder Sprossteil in dem Tube, während die Wurzel oder der nicht abgetrennte Sprossteil in dem Keimträger oder dem Schneidbrett-Unterteil verbleibt. Ein Bediener muss dann lediglich die Aufnahmebehälter, vorzugsweise gemeinsam mit dem Schneidbrett-Oberteil, um 180° drehen, sodass die Öffnungen der Tubes wieder nach oben zeigen und mit entsprechenden Verschlüssen verschlossen werden können. Auf diese Weise ist eine besonders einfache Übertragung von Sprossen oder Sprossteilen in Aufnahmebehälter möglich, insbesondere direkt in ein laborübliches Well-Format.

In einer weiteren bevorzugten Weiterbildung weist die Schneideinrichtung eine Führung für die Schneide oder eine Führung für das Verschieben des Schneidbrett-Oberteil zu dem Schneidbrett-Unterteil auf. Die Schneide ist vorzugsweise als Messer ausgebildet, oder als ein anderes Element, das zum Zertrennen von Keimlingen geeignet ist. Die Führung dient dazu die Schneide bzw. das Schneidbrett-Oberteil beim Schneidprozess zu führen, sodass die einzelnen Keimlinge sicher getrennt werden können. Vorzugsweise ist die Führung am Schneidbrett-Unterteil ausgebildet. Hierdurch kann sichergestellt werden, dass die Schneide bzw. das Schneidbrett-Oberteil nah an dem Schneidbrett-Unterteil gehalten ist und kein Wurzelmaterial oder Perikarp in den Aufnahmebehältern gelangt.

Damit die Schneide zwischen Schneidbrett-Unterteil und Schneidbrett-Oberteil durchgeführt werden kann, ist vorzugsweise ein Spalt zwischen diesen vorgesehen, beispielsweise durch entsprechende Abstandshalter. Der Spalt zwischen dem Schneidbrett-Unterteil und dem Schneidbrett-Oberteil hat vorzugsweise eine Spaltweite von 0,2 bis 2 mm, besonders bevorzugt von 0,5 mm bis 1 mm. Als zweckmäßig hat sich eine Spaltweite von etwa 0,7 mm herausgestellt. Über diesen Spalt ist auch eine Belüftung der Keimlinge möglich, um Pilzbefall zu vermeiden. Vorzugsweise liegen das Schneidbrett-Unterteil und Schneidbrett-Oberteil ohne erkennbaren Spalt während des Anziehens der Keimlinge aufeinander. Erst wenn die Beprobungsvorrichtung zur Durchführung des Schneidvorgangs um 180° gedreht wird, entsteht ein Spalt zwischen Schneidbrett-Unterteil und Schneidbrett-Oberteil in einer vorbestimmten Weite, die beispielsweise durch die oben genannte Führung bestimmt wird.

Vorzugsweise ist die Schneide so dimensioniert, dass jeder Durchlass der ersten Mehrzahl an Durchlässen bei einem Einschieben der Schneide zumindest einmalig vollständig abdeckbar ist. Die Schneide kann in dieser Ausführungsform Schritt für Schritt vorgeschoben werden, und sobald beispielsweise ein Keimling oder eine Reihe an Keimlingen zertrennt ist, wird das Vorschieben der Schneide gestoppt und die Beprobungsvorrichtung gedreht, sodass die abgetrennten Sprosse oder Sprossenteile in den Aufnahmebehälter gelangen. Anschließend wird die Beprobungsvorrichtung wieder herumgedreht, und die Schneide ein Schritt weiter vorgeschoben. Alternativ wird die Beprobungsvorrichtung nicht gedreht, aber die Aufnahmebehälter nach und nach entnommen. Auf diese Weise verdeckt die Schneide die Durchlässe der ersten Mehrzahl an Durchlässen in dem Schneidbrett-Unterteil und verhindert beim Drehen der Beprobungsvorrichtung, dass Wurzelmaterial oder Perikarp durch den entsprechenden Durchlass hindurch in den Aufnahmebehälter fallen kann. Hierdurch wird weiter sichergestellt, dass Kontamination verhindert ist.

Vorzugsweise hat die Schneide eine solche Dimension, dass in einem eingeschobenen Zustand die erste Mehrzahl an Durchlässen vollständig abdeckbar ist. Die Schneide überdeckt in dieser Ausführungsform alle Durchlässe der ersten Mehrzahl an Durchlässen, sodass in einem ersten Schritt die Schneide zum Zertrennen von sämtlichen Keimlingen eingeschoben werden kann und anschließend die Beprobungsvorrichtung gedreht wird, sodass alle abgetrennten Sprosse oder Sprossteile in den entsprechenden Aufnahmebehälter fallen, während die Durchlässe der ersten Mehrzahl an Durchlässen zum Verhindern von Kontamination durch die Schneide abgedeckt sind. In einer anderen Ausführungsform wird das Schneidbrett-Oberteil gegenüber dem Schneidbrett-Unterteil verschoben, sodass im verschobenen Zustand die erste Mehrzahl an Durchlässen vollständig durch undurchlässige Teile des Schneidbrett-Oberteils, welche sich zwischen der zweiten Mehrzahl an Durchlässen befinden, abdeckbar ist. Das Schneidbrett-Oberteil überdeckt in dieser Ausführungsform alle Durchlässe der ersten Mehrzahl an Durchlässen, sodass in einem ersten Schritt sämtliche Keimlinge durch Verschieben durchtrennt werden können und anschließend die Beprobungsvorrichtung gedreht wird, sodass alle abgetrennten Sprosse oder Sprossteile in den entsprechenden Aufnahmebehälter fallen, während die Durchlässe der ersten Mehrzahl an Durchlässen zum Verhindern von Kontamination durch das Schneidbrett-Oberteil abgedeckt sind.

Die Durchlässe der ersten Mehrzahl an Durchlässen weisen einen Querschnitt mit einer lichten Weite auf, die so ausgewählt ist, dass das Perikarp oder Teile davon von den Keimlingen abgestreift werden können. Beim Anziehen der Keimlinge tragen die Sprosse üblicherweise noch Perikarp oder Teile davon an sich, das erst bei fortschreitendem Wachstum durch Blätterwuchs abfallen kann. Bei Keimlingen allerdings ist das Perikarp oder Teile davon üblicherweise noch an den Blättern der Sprosse anhaftend, und würde somit von dem Keimträger durch das Schneidbrett-Unterteil und das Schneidbrett-Oberteil in den Aufnahmebehälter gelangen. Die Durchlässe der ersten Mehrzahl an Durchlässen weisen daher eine solche lichte Weite auf, die eng genug ist um Perikarp von den Keimlingen abzustreifen. Das Perikarp trägt ausschließlich mütterliche DNA. Würde nun Perikarp mit beprobt werden, würde dies die anschließende DNA-Analyse erheblich stören. Die lichte Weite, die ausreichend ist zum Abstreifen von Perikarp, ist abhängig von der Pflanzengattung oder Pflanzenspezies. Als geeignete lichte Weite hat sich eine lichte Weite im Bereich von 1 mm bis 6 mm herausgestellt. Dies ist für die meisten Pflanzengattungen und Pflanzenspezies ausreichend. Beispielsweise hat sich eine lichte Weite von 3 mm für Keimlinge der Beta sp., insbesondere der *Beta vulgaris,* als ausreichend und optimal herausgestellt, um ein sicheres Abstreifen von Perikarp zu erreichen.

Gemäß einer weiteren bevorzugten Ausführungsform sind die Positionierelemente als ringförmiger Kragen um die jeweiligen Durchlässe des Schneidbrett-Oberteils herum ausgebildet. Der Kragen erstreckt sich vorzugsweise weg von der dem Schneidbrett-Unterteil zugewandten Seite, sodass der Kragen als Aufnahme für einen entsprechenden Aufnahmebehälter, insbesondere Laborröhrchen, geeignet ist. Der Kragen muss den jeweiligen Durchlass nicht vollständig umgeben, auch wenn dies bevorzugt ist, um Kontamination zu vermeiden. Bevorzugt ist auch, dass der Kragen zum freien Ende hin konisch zuläuft. Hierdurch kann eine leichtere Montage ermöglicht werden. Vorzugsweise überlappen der Kragen und das entsprechende Laborröhrchen sich in axialer Richtung, um ein Verwachsen eines Keimlings in ein benachbartes Laborröhrchen zu vermeiden.

Weiterhin ist bevorzugt, dass die Positionierelemente Abstandshalter zum Beabstanden der Aufnahmebehälter von dem Schneidbrett-Oberteil aufweisen. Hierdurch wird ein unmittelbares Anliegen der Aufnahmebehälter am Schneidbrett-Oberteil verhindert, und ein Spalt gebildet. Dieser Spalt dient insbesondere zur Belüftung der Keimlinge, sodass diese mit ausreichend Luft versorgt werden. Dies vermeidet unter anderem Pilzbefall. In der Praxis hat sich ein Abstand von 0,1-5 mm, vorzugweise von 0,5 bis 2 mm und besonders bevorzugt von 0,7 bis 1 mm als ausreichend erwiesen. Auch ein größerer Abstand kann vorgesehen sein, allerdings steigt mit größerem Abstand auch die Gefahr einer Kontamination. Der Abstandshalter eines Positionierelements kann als geschlossener Ring um das Positionierelement ausgebildet sein. In einer Ausführung bildet der Abstandshalter mindestens zwei, mindestens drei oder mindestens vier Auflagepunkte angrenzend an das zugehörige Positionierelement für den Aufnahmebehälter. Vorzugsweise ist in axialer Richtung das Positionierelement höher als Abstandshalter, beispielsweise mindestens doppelt so hoch. In einer bevorzugten Ausführung ist der Abstandshalter derart dimensioniert, dass der aufliegende Aufnahmebehälter wenigstens teilweise noch um die Längsachse gedreht werden kann. Dieses lose Aufliegen ermöglicht eine einfachere Entnahme des Aufnahmebehälters bzw. des Racks mit einer Vielzahl von Aufnahmebehältern (Tubes).

Eine weitere bevorzugte Ausführungsform der Beprobungsvorrichtung weist eine Haube zum Abdecken wenigstens der Schneideinrichtung samt Keimlingen auf. Die Haube dient dazu die Aufnahmebehälter zu schützen und Kontamination zu verhindern, aber soll dennoch ein Belüften ermöglichen.

Vorzugsweise weist die Haube ein Haubendach, eine sich von dem Haubendach erstreckende Seitenwand und einen die Seitenwand begrenzenden Haubenrand auf, wobei der Haubenrand dazu ausgebildet ist auf dem Fußteil aufzuliegen. Auf diese Weise bilden Fußteil und Haube insgesamt ein Gehäuse für die Beprobungsvorrichtung und schließen die Schneideinrichtung, den Keimträger und die Aufnahmebehälter in sich ein. Vorzugsweise sitzt die Haube auf dem Fußteil auf, oder ist auf diesem aufgeklemmt. Auf diese Weise ist es auch möglich die Beprobungsvorrichtung mittels der Haube zu tragen. In einer Ausführungsform weist das Haubendach auf der Innenseite eine Montagehilfseinrichtung auf, welches einen korrektes Aussetzen der Haube sicherstellt. Eine solche Montagehilfseinrichtung kann beispielsweise als vorstehender Bolzen am inneren Haubendach ausgebildet sein, wobei bei korrektem Aufsetzen der Haube der Bolzen in eine dafür vorgesehene Vertiefung an der Unterseite des Aufnahmebehälters (z.B. des Tube-Racks) greift.

Das Haubendach ist vorzugsweise so ausgebildet, dass ein Fußteil einer weiteren Beprobungsvorrichtung, mit den Merkmalen einer Beprobungsvorrichtung einer der vorstehend beschriebenen bevorzugten Ausführungsformen einer Beprobungsvorrichtung gemäß dem ersten Aspekt der Erfindung, darauf stapelbar ist. Auf diese Weise können mehrere Beprobungsvorrichtungen aufeinander gestapelt werden, wodurch der Gesamtraumbedarf verringert werden kann.

Vorzugsweise weist die Haube Stützfüße auf, die es erlauben die Haube mit dem Haubenrand nach oben und dem Haubendach nach unten aufzustellen und/oder das Fußteil der weiteren aufgestapelten Beprobungsvorrichtung gemäß einer vorstehend beschriebenen bevorzugten Ausführungsform der Beprobungsvorrichtung gemäß dem ersten Aspekt der Erfindung aufzunehmen. Die Füße dienen also einerseits dazu die Haube mit dem Haubendach nach unten aufzustellen, insbesondere dann, wenn die Beprobungsvorrichtung bereits um 180° gedreht wurde, um die Aufnahmebehälter mit ihren Öffnungen nach oben auszurichten, sodass die abgetrennten Sprosse bzw. Sprossteile in den Aufnahmebehältern zu liegen kommen. Die Haube dient in diesem Fall auch als Behälter zum Aufbewahren der Aufnahmebehälter. Andererseits dienen die Stützfüße dazu eine weitere Beprobungsvorrichtung oben auf der Haube aufzustellen, wenn die Haube mit dem Haubendach nach oben ausgerichtet ist. Die Stützfüße beabstanden dann die obere aufgesetzte Beprobungsvorrichtung und ermöglichen so eine bessere Belüftung der Keimlinge in der unteren Beprobungsvorrichtung.

Vorzugsweise weist die Haube Lüftungsschlitze und/oder Lüftungslöcher auf, um eine ausreichende Belüftung bereitzustellen. Auch hierdurch wird Pilzbefall verhindert.

Vorzugsweise weist die Beprobungsvorrichtung ferner eine Montagehilfseinrichtung auf, die ein seitenvertauschtes Montieren wenigstens der Schneideinrichtung zum Fußteil verhindert. Hierdurch kann verhindert werden, dass bei einem Abnehmen der Schneideinrichtung von dem Fußteil, dieses nicht seitenvertauscht montiert werden kann. Auch hierdurch kann Kontamination weiter verhindert werden. Vorzugsweise verhindert die Montagehilfseinrichtung auch ein seitenvertauschtes Montieren des Keimträgers, der Aufnahmebehälter und/oder der Haube zum Fußteil bzw. zur Schneideinrichtung. Die Montagehilfseinrichtung dient also vorzugsweise dazu ein seitenvertauschtes Montieren von Einzelelementen zueinander zu verhindern. Auf diese Weise kann Kontamination weitgehend verhindert werden.

In einer bevorzugten Weiterbildung sind die Durchlässe der ersten Mehrzahl an Durchlässen kegelstumpfförmig gebildet. Vorzugsweise weisen sie im Querschnitt eine von der Kreisform abweichende Form auf. Es hat sich gezeigt, dass bei pilliertem Saatgut das Problem eines Verdeckens der Durchlässe der ersten Mehrzahl an Durchlässen auftauchen kann, nämlich dann, wenn der Keimling nicht rechtzeitig durch den entsprechenden Durchlass wächst und stattdessen die Pille durch die austreibende Wurzel angehoben wird und so den Durchlass blockiert. Dieses Problem kann durch einen Querschnitt des Durchlasses verhindert werden, der von der Kreisform abweicht, sodass zwischen Wand des Durchlasses und der Saatgut-Pille stets noch eine Lücke bleibt.

Hierzu ist besonders bevorzugt, dass die Durchlässe der ersten Mehrzahl an Durchlässen eine oder mehr, vorzugsweise zwei oder mehr, besonders bevorzugt drei oder mehr sich nach innen erstreckende Nasen aufweisen. Die Nasen können sich relativ weit ins Innere erstrecken, etwa bis zur gewünschten lichten Weite des Durchlasses. Sie sollten sich jedenfalls so weit ins Innere erstrecken, dass ausreichend Raum für den Keimling bleibt, durch die Lücke gebildet aus innerer Wand des Durchlasses, Nase und Saatgut-Pille hindurchzuwachsen.

Des Weiteren wird eine nicht zur Erfindung gehörende Einfülleinheit offenbart, welche zum Einfüllen von Samen in einen Keimträger einer Beprobungsvorrichtung, aufweisend einen Keimträger für Samen oder Keimlinge, der zwischen dem Fußteil und der Schneideinrichtung angeordnet ist und vorzugsweise aus einem saugfähigen Material zum Speichern von Flüssigkeit gebildet ist. Die Einfülleinheit gemäß dem zweiten Aspekt umfasst einen Saugkopf mit einer vierten Mehrzahl an Durchlässen, deren Durchmesser kleiner ist als derjenige der Samen, und einem Unterdruckanschluss zum Anlegen eines Unterdrucks an der vierten Mehrzahl an Durchlässen. Samen können also an den Durchlässen der vierten Mehrzahl an Durchlässen aufgenommen und gehalten werden. Die vierte Mehrzahl an Durchlässen ist folglich vorzugsweise mit der dritten Mehrzahl an Vertiefungen ausgerichtet, sodass bei entsprechender Anordnung des Saugkopfes im Wesentlichen vertikal über dem Keimträger durch Entfernen des Unterdrucks die Samen in die entsprechenden Vertiefungen fallen. Hierdurch kann das Befüllen des Keimträgers gegenüber einer rein manuellen Befüllung deutlich verkürzt werden. An den Unterdruckanschluss kann beispielsweise eine herkömmliche Unterdruckquelle, wie sie üblicherweise in Laboren vorhanden ist, angeschlossen werden. Zum Halten des Samens ist kein besonders großer Unterdruck erforderlich, so dass dieser auch gegebenenfalls manuell mit einem Balg oder dergleichen aufgebraucht werden kann. Die Durchlässe der vierten Mehrzahl an Durchlässen weisen jeweils vorzugsweise einen Durchmesser auf, der kleiner ist als: 2mm, 3mm, 4mm, 5mm.

Ferner ist bevorzugt vorgesehen, dass die Einfülleinheit einen Abstandshalter zum Beabstanden des Saugkopfes von dem Keimträger umfasst. Hierdurch kann ein "Festsaugen" des Saugkopfes an dem Keimträger verhindert werden. Der Abstandshalter ist vorzugsweise so ausgebildet, dass er auch als Positionierhilfe dient. Er kann beispielsweise als Rahmen ausgebildet sein, in den der Saugkopf teilweise einführbar ist, wobei der Rahmen dann über entsprechende Belüftungsöffnungen verfügt, um den Aufbau eines Vakuums und damit das Festsaugen zu verhindern.

Vorzugsweise umfasst die Einfülleinheit einen am Saugkopf temporär befestigbaren Rahmen zum Bilden einer Begrenzung bei einem Aufnehmen von Samen mittels des Saugkopfes. Der Rahmen kann beispielsweise zunächst auf den Saugkopf aufgesteckt werden, und Samen können auf den Saugkopf gegeben werden. Der Rahmen verhindert dann, dass die Samen vom Saugkopf herunterfallen. Nachdem nun Durchlässe der vierten Mehrzahl an Durchlässen einen Samen aufgenommen haben, kann der Rahmen entfernt und der Saugkopf zum Keimträger gebracht werden, um die am Saugkopf aufgenommenen Samen in die jeweiligen Vertiefungen der dritten Mehrzahl an Vertiefungen abzugeben.

Ferner wird ein System offenbart, welches zum Anziehen und Beproben von Keimlingen von Pflanzen, umfassend eine Beprobungsvorrichtung nach einer der vorstehend beschriebenen Ausführungsformen einer Beprobungsvorrichtung gemäß der Erfindung, und eine Einfülleinheit nach der vorstehend beschriebenen Ausführungsformen einer Einfülleinheit. Es soll verstanden werden, dass das System gleiche und ähnliche Unteraspekte aufweist, wie sie insbesondere in den abhängigen Ansprüchen niedergelegt sind. Insofern wird vollumfänglich auf die obige Beschreibung Bezug genommen.

Gemäß einem weiteren Aspekt der Erfindung wird die eingangs genannte Aufgabe gelöst durch ein Verfahren zum Anziehen und Beproben von Keimlingen mit einer Beprobungsvorrichtung gemäß einer der vorstehend beschriebenen bevorzugten Ausführungsformen einer Beprobungsvorrichtung gemäß der Erfindung, umfassend die Schritte: Bereitstellen oder Anziehen von Keimlingen, vorzugsweise aus Samen; warten bis sich die Keimlinge bzw. der zur Beprobung vorgesehene Teil der Keimlinge (Spross oder Sprossteile) durch die erste als auch durch die zweite Mehrzahl an Durchlässen aufgrund fortschreitendem Längenwachstum durch erstrecken; Einschieben einer Schneide zwischen dem Schneidbrett-Unterteil und dem Schneidbrett-Oberteil zum Zertrennen der Keimlinge oder Verschieben des Schneidbrett-Oberteil gegenüber dem Schneidbrett-Unterteil zum Zertrennen der Keimlinge; Aufnehmen von abgetrennten Sprossen oder Sprossteilen der Keimlinge in jeweils einem Aufnahmebehälter; und entnehmen der Aufnahmebehälter aus der Beprobungsvorrichtung. Es soll verstanden werden, dass die Beprobungsvorrichtung gemäß der Erfindung, die Einfülleinheit und das Verfahren der Erfindung gleiche und ähnliche Unteraspekte aufweisen, wie sie insbesondere in den abhängigen Ansprüchen niedergelegt sind. Insofern wird vollumfänglich auf die obige Beschreibung Bezug genommen.

Für den Fall, dass Samen verwendet werden und nicht bereits Keimlinge, umfasst das Verfahren vorzugsweise die Schritte: Einfüllen von Samen in eine dritte Mehrzahl an Vertiefungen in einem Keimträger durch Bereitstellen von Unterdruck zum Ansaugen von Samen und Lösen des Unterdrucks zum Ablegen der Samen in den Vertiefungen. Diese Schritte werden vorzugsweise mittels der Einfülleinheit ausgeführt.

Im Schritt des Wartens bis sich die Keimlinge durch die erste als auch durch die zweite Mehrzahl an Durchlässen durch erstrecken, ist es nicht zwingend erforderlich, dass sich die Keimlinge durch jeden der Durchlässe der ersten und zweiten Mehrzahl an Durchlässen durch erstrecken. Je nachdem, wie viele Samen verwendet wurden oder wie viele Keimlinge sich aus Samen entwickelt haben, kann auch eine gewisse geringere Anzahl an Keimlingen vorgesehen sein, sodass nicht jede Vertiefung des Keimträgers mit einem Keimling versehen ist und sich somit auch nicht durch jeden Durchlass der ersten und zweiten Mehrzahl an Durchlässen ein Keimling durch erstreckt. In einer anderen Ausführung befindet sich in mindestens einer Vertiefung des Keimträgers mehr als ein Samen, jedoch ist der entsprechende Durchlass der ersten und zweiten Mehrzahl an Durchlässen derart dimensioniert, dass nur ein Keimling hindurchwachsen kann. Somit können Ausfälle beim Keimen kompensiert werden.

Vorzugsweise umfasst das Verfahren ferner den Schritt: Wässern des Keimträgers zum Versorgen der Samen bzw. der Keimlinge mit Wasser. Vorzugsweise umfasst das Verfahren ferner den Schritt: Umdrehen der Beprobungsvorrichtung um 180° um eine Achse, die senkrecht zur Längserstreckung der Aufnahmebehälter ausgerichtet ist, sodass die Aufnahmebehälter mit ihren Öffnungen nach oben ausgerichtet sind. Dieser Schritt wird vorzugsweise nach dem Einschieben der Schneide und vor Herausziehen der Schneide durchgeführt oder nach dem Verschieben des Schneidbrett-Oberteils gegenüber dem Schneidbrett-Unterteil zum Zertrennen der Keimlinge.

Vorzugsweise wird das Verfahren automatisiert bzw. semi-automatisiert durchgeführt. So ist es beispielsweise bevorzugt, dass Samen mittels einer automatisierten Saatvorrichtung in entsprechende Vertiefungen des Keimträgers eingebracht werden. Bevorzugt ist auch, dass das Einschieben der Schneide sowie das Umdrehen der Beprobungsvorrichtung automatisiert erfolgen. Es kann vorgesehen sein, dass einzelne Beprobungsvorrichtungen dazu auf einem Transportband transportiert werden und dann mittels einer automatisierten Vorrichtung eine Schneide eingeschoben wird, anschließend die Beprobungsvorrichtung gedreht wird und die Aufnahmebehälter, die vorzugsweise als Tubes in einem Tube-Rack ausgebildet sind, entnommen werden. Üblicherweise sind solche Tubes eines Tube-Racks mit Barcodes oder QR-Codes versehen, die die entsprechende Probe identifizieren. Es kann vorgesehen sein, dass diese Barcodes oder QR-Codes automatisiert ausgelesen werden. Üblicherweise werden die abgetrennten Sprosse oder Sprossteile weiterverarbeitet und beispielsweise einer DNA-Analyse unterzogen. Auch der Transport der Aufnahmebehälter zu dem Ort der späteren DNA-Analyse kann automatisiert, insbesondere unter Verwendung der Barcodes oder QR-Codes auf den Tubes oder den Tube-Racks erfolgen.

Vorzugsweise wird die Beprobungsvorrichtung gemäß der Erfindung zum Anziehen von Keimlingen genutzt, vorzugsweise für eine Pflanze ausgewählt aus den Gattungen: Hordeum, Sorghum, Saccharum, Zea, Setaria, Oryza, Triticum, Secale, Triticale, Malus, Brachypodium, Aegilops, Daucus, Beta, Eucalyptus, Nicotiana, Solanum, Coffea, Vitis, Erythrante, Genlisea, Cucumis, Marus, Arabidopsis, Crucihimalaya, Cardamine, Lepidium, Capsella, Olmarabidopsis, Arabis, Brassica, Eruca, Raphanus, Citrus, Jatropha, Populus, Medicago, Cicer, Cajanus, Phaseolus, Glycine, Gossypium, Astragalus, Lotus, Torenia, Allium, und/oder Helianthus, vorzugsweise ist die Pflanze ausgewählt aus den Spezies: *Hordeum vulgare, Hordeum bulbusom, Sorghum bicolor, Saccharum officinarium, Zea* spp., umfassend *Zea mays, Setaria italica, Oryza minuta, Oryza sativa, Oryza australiensis, Oryza alta, Triticum aestivum, Triticum durum, Secale cereale,* Triticale, *Malus domestica, Brachypodium distachyon, Hordeum marinum, Aegilops tauschii, Daucus glochidiatus, Beta* spp., umfassend *Beta vulgaris, Daucus pusillus, Daucus muricatus, Daucus carota, Eucalyptus grandis, Nicotiana sylvestris, Nicotiana tomentosiformis, Nicotiana tabacum, Nicotiana benthamiana, Solanum lycopersicum, Solanum tuberosum, Coffea canephora, Vitis vinifera, Erythrante guttata, Genlisea aurea, Cucumis sativus, Marus notabilis, Arabidopsis arenosa, Arabidopsis lyrata, Arabidopsis thaliana, Crucihimalaya himalaica, Crucihimalaya wallichii, Cardamine nexuosa, Lepidium virginicum, Capsella bursa pastoris, Olmarabidopsis pumila, Arabis hirsute, Brassica napus, Brassica oleracea, Brassica rapa, Raphanus sativus, Brassica juncacea, Brassica nigra, Eruca vesicaria subsp. sativa, Citrus sinensis, Jatropha curcas, Populus trichocarpa, Medicago truncatula, Cicer yamashitae, Cicer bijugum, Cicer arietinum, Cicer reticulatum, Cicerjudaicum, Cajanus cajanifolius, Cajanus scarabaeoides, Phaseolus vulgaris, Glycine max, Gossypium* sp., *Astragalus sinicus, Lotus japonicas, Torenia fournieri, Allium cepa, Allium fistulosum, Allium sativum, Helianthus annuus, Helianthus tuberosus und*/*oder Allium tuberosum,* besonders bevorzugt sind *Beta vulgaris,* Zea *mays, Triticum aestivum, Hordeum vulgare, Secale cereale, Helianthus annuus, Solanum tuberosum, Sorghum bicolor, Brassica rapa, Brassica napus, Brassica juncacea, Brassica oleracea, Raphanus sativus, Oryza sativa, Glycine max* und/oder *Gossypium* sp.

Eine Ausführungsform der Erfindung wird nun nachfolgend anhand der Zeichnungen beschrieben. Diese sollen die Ausführungsform nicht notwendigerweise maßstäblich darstellen, vielmehr sind die Zeichnungen, wo zur Erläuterung dienlich, in schematisierter und/oder leicht verzerrter Form ausgeführt.

Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsform sowie anhand der Zeichnungen; diese zeigen in:
Fig. 1a eine perspektivische Explosionszeichnung der Beprobungsvorrichtung;
Fig. 1b eine Seitenansicht der Explosionszeichnung aus Figur 1a;
Fig. 2 einen Vollschnitt durch die Beprobungsvorrichtung;
Fig. 3 eine perspektivische Ansicht eines Fußteils;
Fig. 4a eine perspektivische Ansicht eines Keimträgers;
Fig. 4b eine Seitenansicht des Keimträgers aus Figur 4a;
Fig. 5a eine perspektivische Ansicht eines Schneidbrett-Unterteils;
Fig. 5b eine Draufsicht auf das Schneidbrett-Unterteil gemäß Figur 5a;
Fig. 5c eine Seitenansicht des Schneidbrett-Unterteils gemäß Figur 5a;
Fig. 6 eine perspektivische Ansicht eines Schneidbrett-Oberteils;
Fig. 7a eine perspektivische Ansicht einer Haube;
Fig. 7b eine Draufsicht auf die Haube gemäß Figur 7a;
Fig. 8a einen Vollschnitt durch eine um 180° gedrehte Beprobungsvorrichtung mit teilweise eingeschobener Schneide;
Fig. 8b einen Vollschnitt durch eine um 180° gedrehte Beprobungsvorrichtung mit gegeneinander verschobenen Schneidbrett-Oberteil und Schneidbrett-Unterteil;
Fig. 9 mehrere aufeinander gestapelte Beprobungsvorrichtungen;
Fig. 10a eine perspektivische Ansicht eines Schneidbrett-Unterteils in einer zweiten Variante;
Fig. 10b eine Vergrößerung aus Fig. 10a;
Fig. 10c eine vergrößerte Frontalansicht des Schneidbrett-Unterteils aus Fig. 10a;
Fig. 11a eine perspektivische Ansicht eines Saugkopfes einer Einfülleinheit samt Rahmen und Samen;
Fig. 11b eine weitere perspektivische Ansicht des Saugkopfes, wobei der Rahmen entfernt ist;
Fig. 11c eine perspektivische Ansicht eines Keimträgers mit Abstandshalter; und
Fig. 11d den Keimträger aus Fig. 11c mit darauf aufgesetztem Saugkopf.

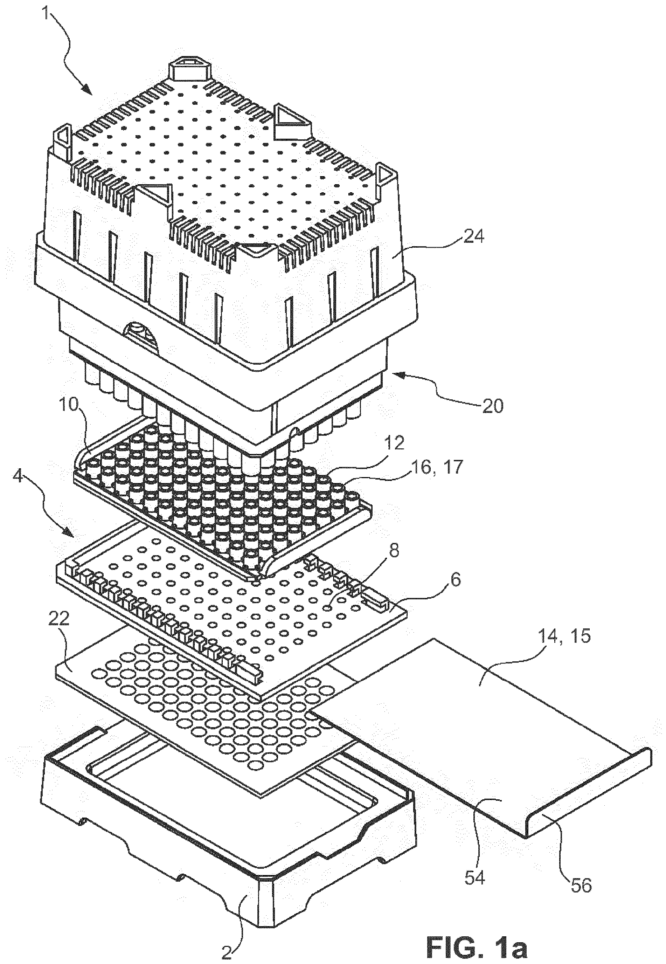

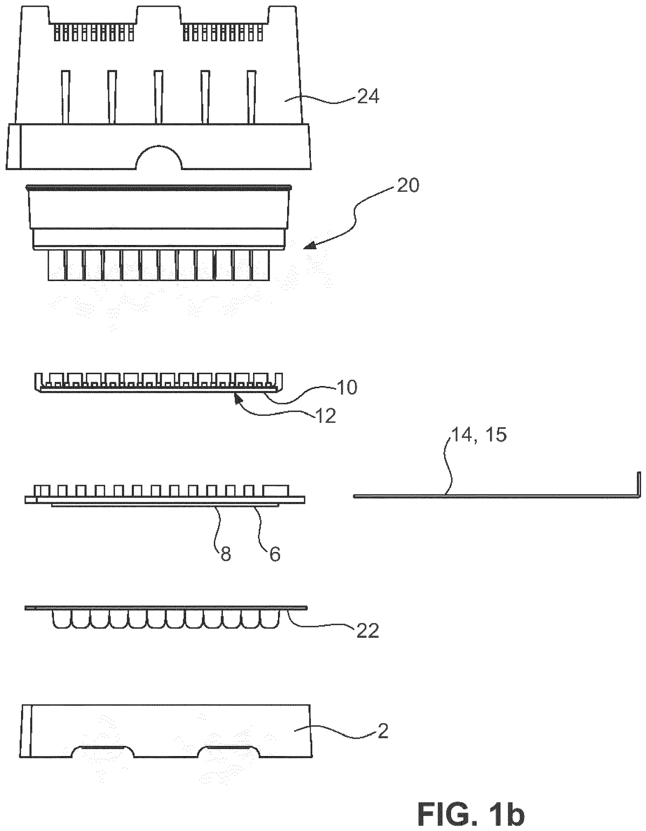

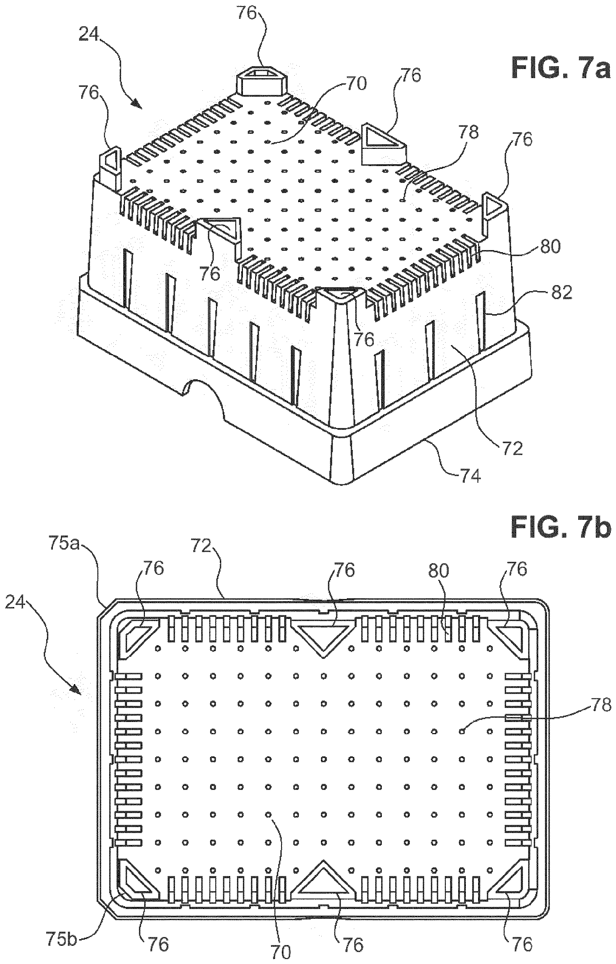

Eine Beprobungsvorrichtung 1 gemäß der vorliegenden Erfindung (Fig. 1a) weist ein Fußteil 2 und eine Schneideinrichtung 4 auf. Die Schneideinrichtung 4 weist in diesem Ausführungsbeispiel ein Schneidbrett-Unterteil 6 mit einer ersten Mehrzahl an Durchlässen 8 auf. Auf dem Schneidbrett-Unterteil 6 ist ein Schneidbrett-Oberteil 10 angeordnet, welches eine zweite Mehrzahl an Durchlässen 12 aufweist. Die Schneideinrichtung 4 weist weiterhin eine Schneide 14 auf, die in diesem Ausführungsbeispiel als Messer 15 ausgebildet ist. Die Schneide 14 ist zwischen dem Schneidbrett-Unterteil 6 und dem Schneidbrett-Oberteil 10 einschiebbar. Auf der mit Bezug auf Figur 1a oberen Seite des Schneidbrett-Oberteils 10 ist eine Mehrzahl an Positionierelemente 16 vorgesehen, die in diesem Ausführungsbeispiel als im Wesentlichen zylindrische Kragen 17 ausgebildet sind. Die Positionierelemente 16 sind dafür vorgesehen, Aufnahmebehälter 20 aufzunehmen und so gegenüber der Schneideinrichtung 4 zu positionieren. Unterhalb der Schneideinrichtung 4 aber oberhalb des Fußteils 2 ist ein Keimträger 22 angeordnet. Schließlich lässt sich in Figur 1a, 1b noch erkennen, dass oberhalb der Aufnahmebehälter 20 eine Haube 24 angeordnet ist, die später mit Bezug auf Figur 7a, 7b noch genauer erläutert werden wird.

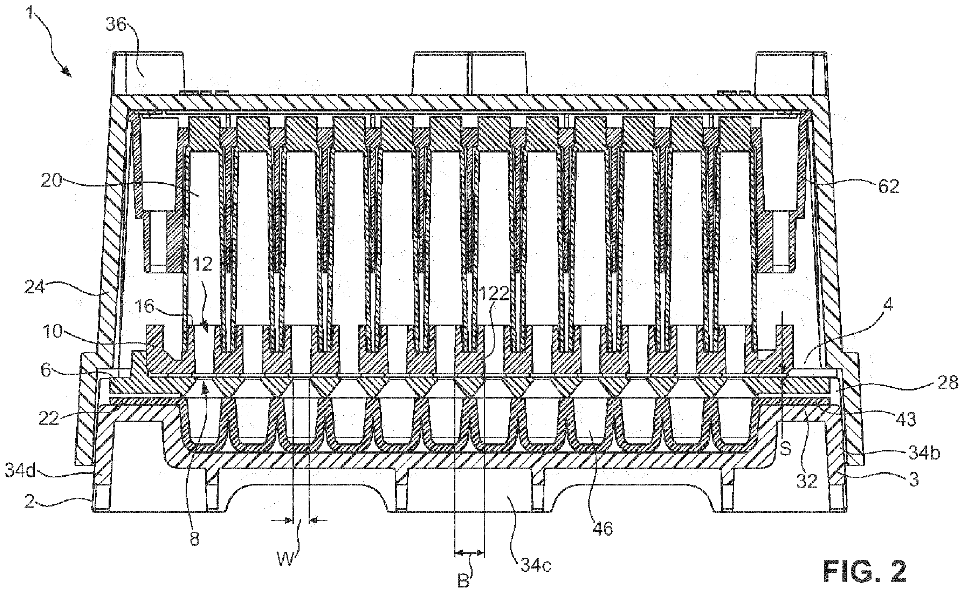

Die einzelnen Elemente werden auf- bzw. ineinander gestapelt und bilden im montierten Zustand eine Einheit, die durch das Fußteil 2 und die Haube 24 geschlossen ist. Dieser Aufbau lässt sich gut anhand von Figur 2 erkennen. Aus Figur 2 lässt sich entnehmen, dass die einzelnen Elemente direkt auf- bzw. ineinander gestapelt sind und mit der Haube 24 abgedeckt sind. Die Haube 24 ist optional und nicht zwingend für die Beprobungsvorrichtung 1 erforderlich.

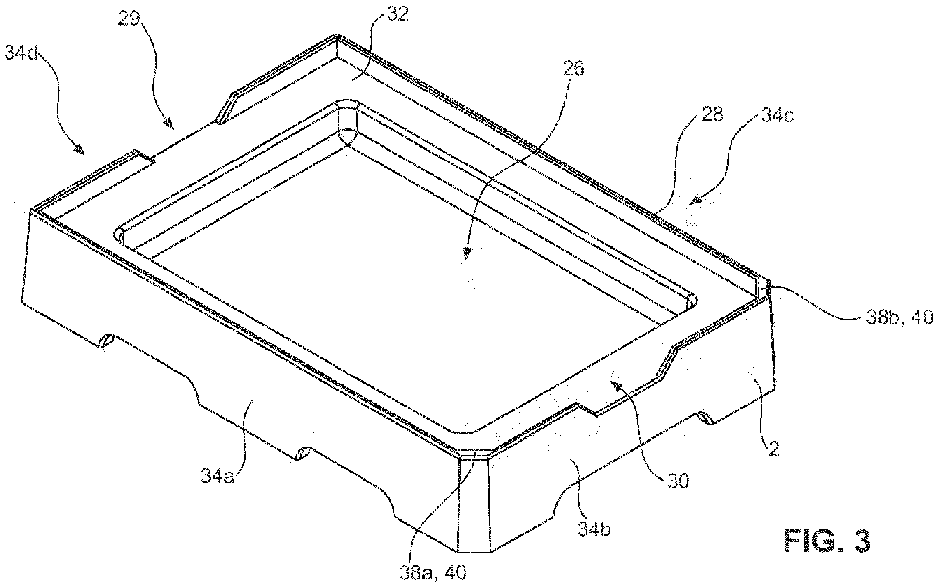

Das in Figur 2 unterste Element ist das Fußteil 2 (vgl. Figur 3). Das Fußteil 2 hat eine im Wesentlichen rechteckige Grundkonfiguration mit einer zentralen ebenfalls im Wesentlichen rechteckigen Vertiefung 26. Ferner weist das Fußteil 2 einen teilweise umlaufenden Rand 28 auf. An dem Rand 28 sind gegenüberliegend zwei Eingriffe 29, 30 vorgesehen, über die ein Benutzer einzelne Elemente der Beprobungsvorrichtung 1 von dem Fußteil 2 entnehmen kann. Zwischen dem Rand 28 und der Vertiefung 26 ist eine Auflagefläche 32 vorgesehen, auf der insbesondere der Keimträger 22 aufliegen kann. Das Fußteil 2 weist darüber hinaus vier leicht schräg angeordnete Seitenwände 34a, 34b, 34c, 34d auf, die so abgewinkelt sind, dass ein Fußteil 2 auf Stützfüßen 36 der Haube 24 (weiter unten noch genauer beschrieben) aufgestellt werden kann.

Der Rand 28 weist zwei Abflachungen 38a, 38b auf, die als Montagehilfseinrichtung 40 wirken. Auch diese werden im Zusammenhang mit den weiteren Bauteilen noch im Detail beschrieben werden. Das Fußteil 2 ist vorzugsweise aus einem wasserfesten Material, insbesondere Kunststoff. Es kann vorzugsweise als Spritzgussbauteil ausgebildet sein.

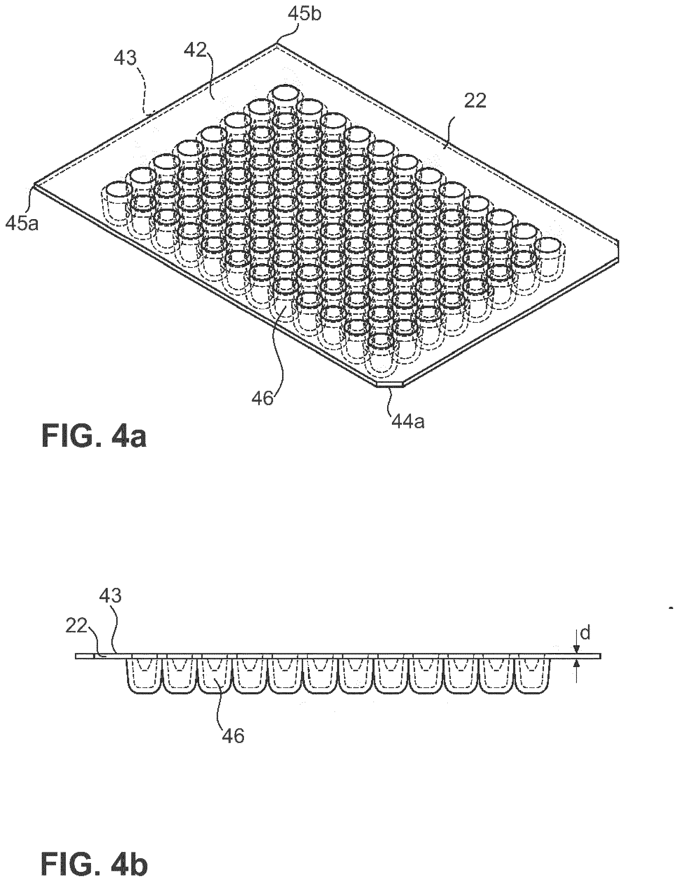

Auf dem Fußteil 2 wird der Keimträger 22 (vgl. Figur 4a, 4b) angeordnet. Der Keimträger 22 weist einen plattenförmigen Grundkörper 42 mit einem umlaufenden flachen Rand 43 auf. Mit dem flachen Rand 43 liegt der Keimträger 22 auf der Stützfläche 32 des Fußteils 2 auf. Wie in Figur 4 zu erkennen, weist der Rand 43 ebenfalls zwei Abflachungen 44a, 44b auf, die mit den Abflachungen 38a, 38b des Fußteil 2 korrespondieren. Die anderen Ecken 45a, 45b des Rands 43 sind rechtwinklig und nicht abgeflacht ausgebildet, sodass diese nicht an dem Ende des Fußteils 2 angeordnet werden können, an denen die Abflachung 38a, 38b vorgesehen sind. Ein seitenvertauschtes Montieren des Keimträgers 22 zum Fußteil 2 ist somit verhindert. Der Keimträger 22 kann nur in der Orientierung, die in Figur 4a gezeigt ist, mit dem Fußteil 2 in der Orientierung, die in Figur 3 gezeigt ist, gefügt werden.

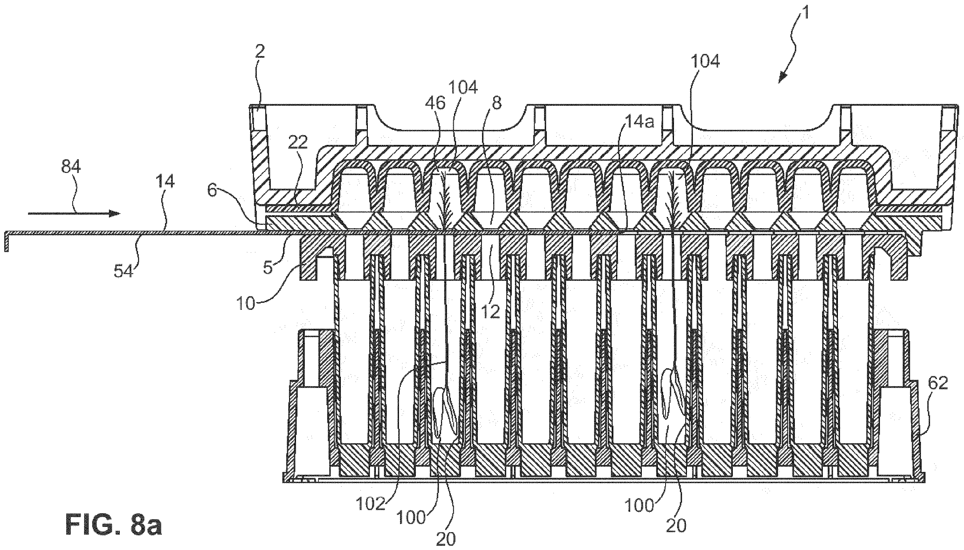

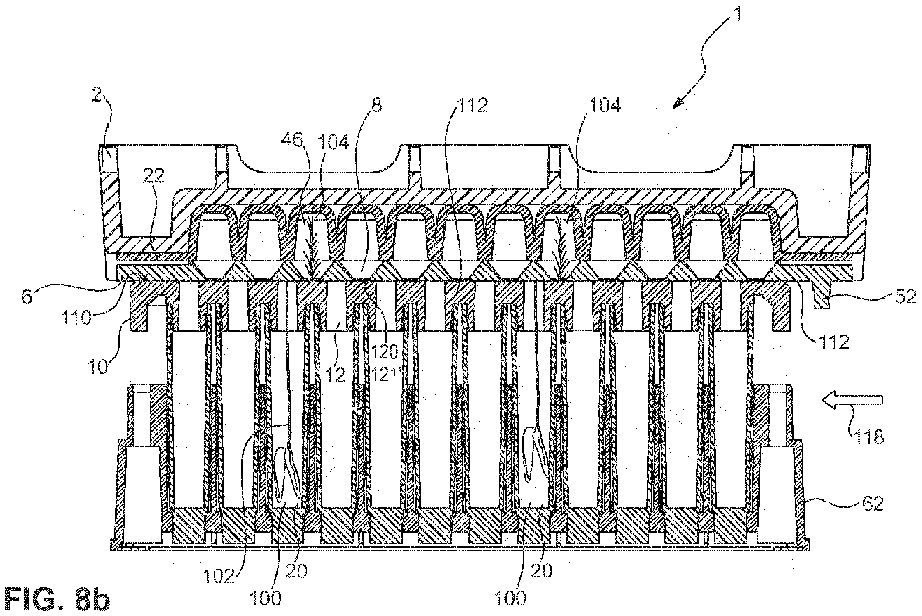

Der Keimträger 22 weist eine Vielzahl an Vertiefungen 46 auf, die hier im 96er-Well-Format angeordnet sind. D.h. die Vertiefungen 46 entsprechen dem üblichen 96er-Well-Laborformat und sind mit diesem kompatibel. Die Vertiefungen 46 sind so ausgebildet, dass sie einen Samen und/oder einen Keimling 100 (vgl. Fig. 8) aufnehmen können. Die Tiefe der Vertiefungen 46 korrespondiert mit der Vertiefung 26 des Fußteil 2, sodass der Keimträger 22 leicht in das Fußteil 2 einsetzbar ist (vgl. Fig. 2).

Der Keimträger 22 hat eine im Wesentlichen gleichmäßige Dicke d und ist vorzugsweise aus einem Altpapiermaterial gepresst. Auch ein anderes Zellstoffmaterial kann verwendet werden, wobei Altpapier aus ökologischen Gründen besonders bevorzugt ist. In dem vorliegenden Ausführungsbeispiel (Fig. 4a, 4b) ist die Dicke d des Keimträgers 22 1,2 mm. In diesem Ausführungsbeispiel hat der Keimträger 22 ein Volumen von 42,66 cm³ (ungepresst), eine Dichte von 0,36 g/cm³ und eine maximale Saugfähigkeit von 45,36 ml Wasser. Vor Verwendung des Keimträgers 22 wird dieser bei 180 °C nachgepresst, um eine gleichmäßige Oberfläche zu erhalten. Hierdurch wird die Dicke d, die ursprünglich 1,5 mm beträgt (Vol. 42,66 cm³) auf 1,2 mm reduziert. Es hat sich herausgestellt, dass dieses Volumen und Saugfähigkeit ausreichend ist, um Keimlinge 100 der Gattung Beta, insbesondere der Spezies *Beta vulgaris,* ca. eine Woche mit ausreichend Flüssigkeit zu versorgen.

Die Vertiefungen 46 sind so ausgebildet, dass die Keimlinge 100 nur nach oben wachsen können. Die Vertiefungen 46 sind untereinander nicht verbunden, sondern vollständig getrennt.

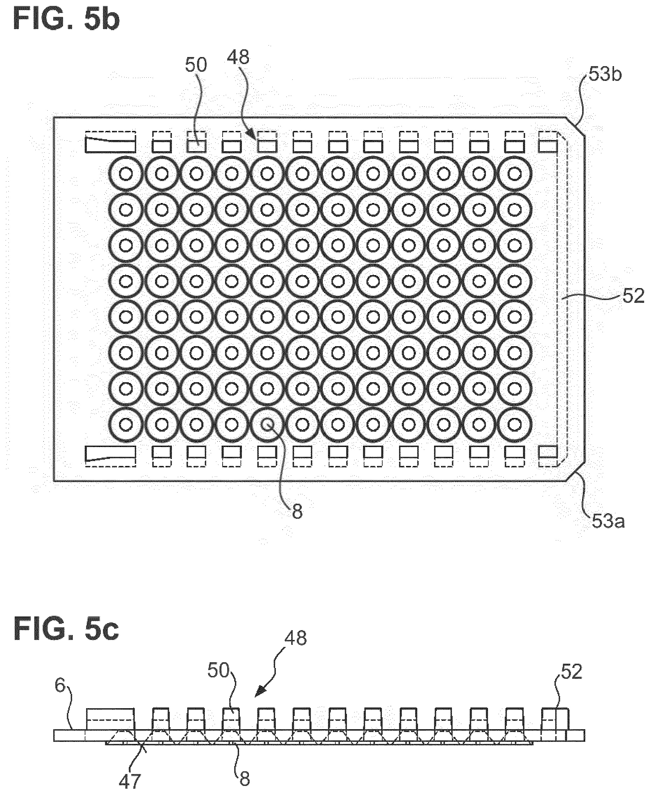

Auf dem Keimträger 22 liegt das Schneidbrett-Unterteil 6 auf. Das Schneidbrett-Unterteil 6 hat eine im Wesentlichen ebene untere Seite 47 (vgl. Figur 5c), die direkt auf dem Keimträger 22 aufliegt. Da sich der Keimträger 22 an seiner Unterseite in der Vertiefung 26 des Fußteils 2 abstützt, kann dieser, auch wenn er gewässert ist, nicht nach unten durchbiegen und somit seinen Kontakt zwischen Schneidbrett-Unterteil 6 und Keimträger 22 verlieren.

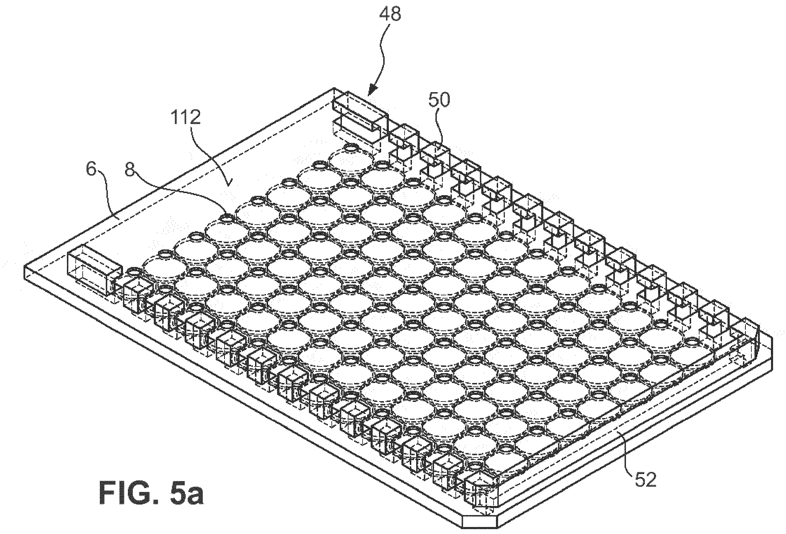

Das Schneidbrett-Unterteil 6 weist eine erste Mehrzahl an Durchlässen 8 auf, von denen in den Figuren 5a, 5b und 5c jeweils nur einer mit Bezugszeichen versehen ist. Die Durchlässe 8 der ersten Mehrzahl an Durchlässen fluchten im Wesentlichen mit Zentralachsen der Vertiefungen 46, sodass jeder Vertiefung 46 ein Durchlass 8 zugeordnet ist. Da das Schneidbrett-Unterteil 6 direkt auf dem Keimträger 22 aufliegt, können Keimlinge 100 aus den Vertiefungen 46 nur durch die Durchlässe 8 hindurch wachsen. Die Durchlässe 8 sind ferner so ausgebildet, dass sie sich weg vom Keimträger 22 verjüngen. Sie haben somit einen in etwa kegelstumpfförmigen Querschnitt (vgl. Fig. 2) der an seiner breitesten Stelle etwas breiter ist als die Öffnung der Vertiefung 46 der Keimträger 22, und an seiner engsten Stelle eine lichte Weite w aufweist. Die lichte Weite w ist so gewählt, dass Perikarp des Keimlings 100 abgestreift wird. Perikarp hat nur mütterliche DNA und würde eine nachfolgende DNA-Analyse verfälschen. Daher ist es wichtig, dass Perikarp vor der Analyse entfernt wird. Dies kann auch manuell vor einer Analyse erfolgen. Im Rahmen des vorliegenden Ausführungsbeispiels aber wird Perikarp abgestreift, indem die lichte Weite w begrenzt ist und zwar auf einen Wert zwischen 1 mm und 6 mm. In dem vorliegenden Ausführungsbeispiel beträgt die lichte Weite w etwa 3 mm, da sich eine Weite von ca. 3 mm als zweckdienlich für Keimlinge der Gattung Beta sp., insbesondere der Spezies *Beta vulgaris,* erwiesen hat.

An dem Schneidbrett-Unterteil 6 ist ferner eine Führung 48 zum Führen der Schneide 14 angeordnet. Die Führung 48 umfasst eine Mehrzahl an klauenförmigen Vorsprüngen 50, von denen in Figur 5a, 5b und 5c jeweils einer mit Bezugszeichen versehen ist. An einem axialen Ende des Schneidbrett-Unterteils 6 ist ferner ein Anschlag 52 vorgesehen, der zum Begrenzen des Bewegungswegs der Schneide 14 dient. Die klauenförmigen Vorsprünge 50 dienen einerseits zum Führen der Schneide 14 in der Ebene, d.h. parallel zum Schneidbrett-Unterteil 6, aber verhindern auch ein axiales Abheben der Schneide 14 beim Schneidvorgang. Dies ist insbesondere dann vorteilhaft, wenn die Keimlinge 100 eine gewisse Festigkeit haben und ein Schneiden mit einer gewissen Kraft ausgeführt werden muss.

Auch das Schneidbrett-Unterteil 6 weist Abflachungen 53a, 53b auf, die mit den Abflachungen 38a, 38b des Fußteils 2 korrespondieren. Der Rand 28 des Fußteils 2 hat eine solche Höhe, dass auch das Schneidbrett-Unterteil 6 im eingesetzten Zustand von dem Rand 28 umgeben wird (vgl. Fig. 2). Hierdurch wird eine gute Halterung des Schneidbrett-Unterteils 6 und damit der Schneideinrichtung 4 erreicht. Ein Verrutschen von Schneidbrett-Unterteil 6 zu Keimträger 22 kann vermieden werden, wodurch Kontamination verhindert werden kann.

Die Schneide 14 selbst ist am besten in den Figuren 1a und 1b zu sehen. Sie ist als Messer 15 ausgebildet und weist einen im Wesentlichen flachen Grundkörper 54 auf. Der Grundkörper 54 kann beispielsweise als Metallblech ausgebildet sein und eine solche Dimension haben, dass er im eingeschobenen Zustand sämtliche der Durchlässe 8 der ersten Mehrzahl an Durchlässen abdeckt. An einem axialen Ende weist der Grundkörper 54 einen Handgriff 56 auf, der in diesem Ausführungsbeispiel (Fig. 1a, 1b) nur als winkliger Vorsprung ausgebildet ist. Es kann ebenso vorgesehen sein, dass an diser beispielsweise Stelle ein separater Handgriff aus Kunststoff vorgesehen ist.

Auf dem Schneidbrett-Unterteil 6 liegt das Schneidbrett-Oberteil 10 auf. Dieses liegt aber nicht vollflächig auf dem Schneidbrett-Unterteil 6 auf, sondern mit einem Spalt S (vgl. Fig. 2). Der Spalt S hat in diesem Ausführungsbeispiel eine Weite von wenigstens 0,7 mm, und dient dazu, dass die Schneide 14 eingeführt werden kann. Der Spalt S kann auch eine größere Weite als 0,7 mm haben, sollte aber nicht zu groß sein, dass ein Verwachsen von einem Keimling 100 aus einer Vertiefung 46 in einen lateral benachbarten Aufnahmebehälter 20 verhindert wird.

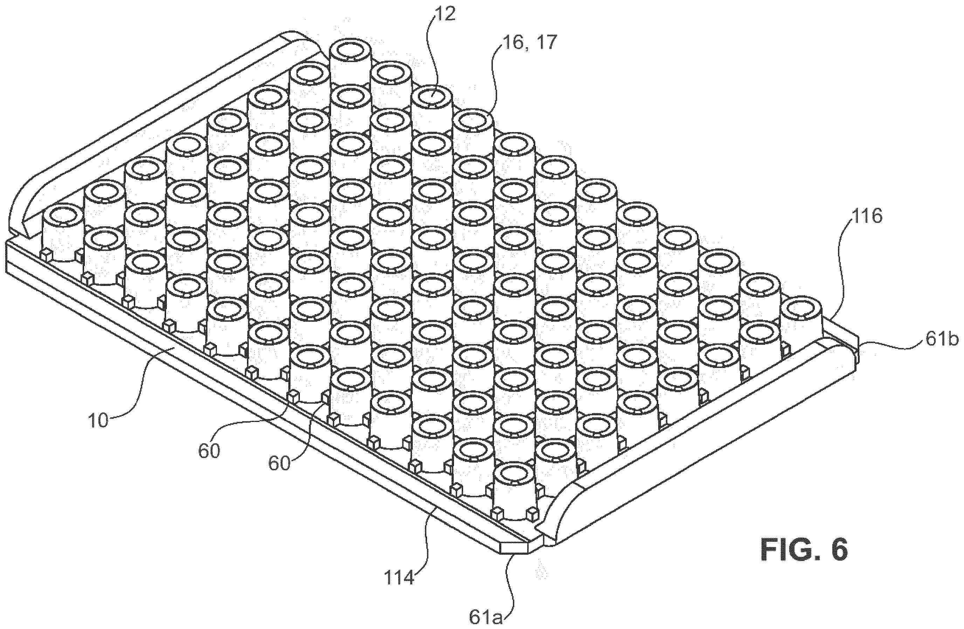

Die Durchlässe 12 der zweiten Mehrzahl an Durchlässen des Schneidbrett-Oberteils 10 sind wiederum mit den Durchlässen 8 der ersten Mehrzahl an Durchlässen des Schneidbrett-Unterteils 6 ausgerichtet. Insofern fluchten diese wie in Figur 2 gezeigt auch mit den Vertiefungen 46 des Keimträgers 22. Um die Durchlässe 12 herum ist jeweils ein Positionierelement 16 in Form eines Kragens 17 angeordnet. Am Fuß des Kragens 17 sind Abstandshalter 60 angeordnet (in Fig. 6 nur einer mit Bezugszeichen versehen), um die Aufnahmebehälter 20 zu beabstanden. Die Kragen 17 sind leicht konisch zulaufend und erstrecken sich im montierten Zustand in das Innere der jeweiligen Aufnahmebehälter 20 hinein (vgl. Fig. 2). Durch die axiale Überlappung der Kragen 17 und Aufnahmebehälter 20 wird ein seitliches Verwachsen von Keimlingen 100 von einer Vertiefung 46 in einen seitlich lateral versetzten Aufnahmebehälter 20 verhindert.

Auch an dem Schneidbrett-Oberteil 10 sind zwei Abflachungen 61a, 61b vorgesehen, die aber nicht mit den Abflachungen 38a, 38b des Fußteils 2 zusammenwirken. Vielmehr wirken die Abflachung 61a, 61b mit der Haube 24 zusammen, wie weiter unten beschrieben werden wird.

Die Aufnahmebehälter 20 sind in diesem Ausführungsbeispiel Teil eines Tube-Racks 62 und werden durch das Rack 62 gehalten. Die Aufnahmebehälter 20 sind also als Tubes oder Laborröhrchen ausgebildet. Das gesamte Tube-Rack 62 sitzt folglich auf dem Schneidbrett-Oberteil 10 auf, wobei sich jedes Laborröhrchen über einen Vorsprung 16 erstreckt. Die Keimlinge 100 können also direkt durch das Schneidbrett-Oberteil 10 in die entsprechenden Tubes hineinwachsen.

Die Haube 24 (vgl. Fig. 7a, 7b) weist ein Haubendach 70, sowie eine sich von diesem erstreckende Seitenwand 72 auf, die in einem Haubenrand 74 endet. Die Seitenwand 72 weist Abflachungen 75a, 75b auf, die mit den Abflachungen 61a, 61b des Schneidbrett-Oberteils 10 zusammenwirken. Hierdurch wird ein seitenvertauschtes Aufsetzen der Haube 24 verhindert.

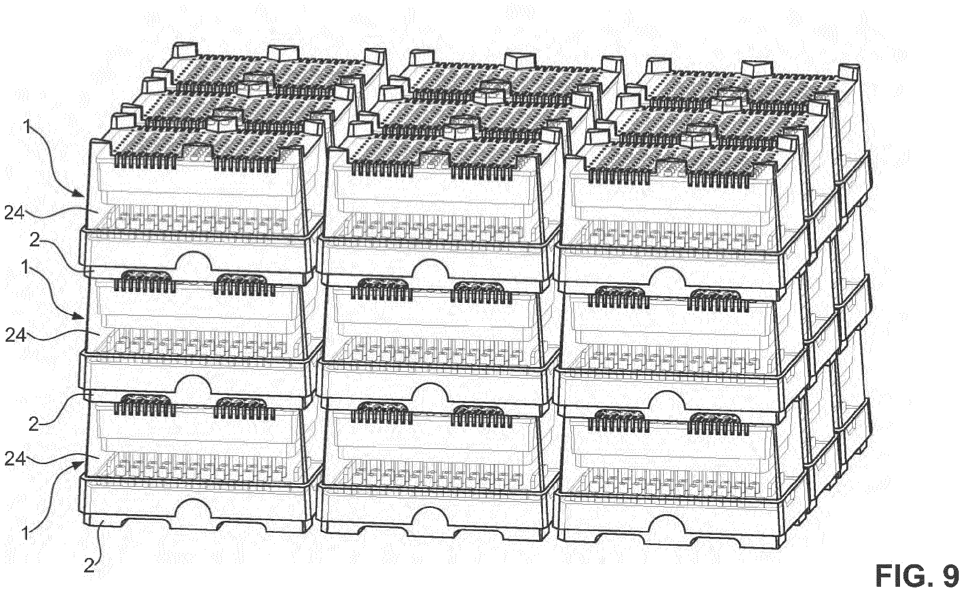

Die Haube 24 weist Stützfüße 76 auf, die an allen vier Ecken sowie zwei im mittleren Bereich vorgesehen sind. Die Stützfüße 76 dienen einerseits dazu die Haube 24 mit dem Haubendach 70 nach unten aufzustellen. Andererseits dienen die Stützfüße 76 auch dazu ein Fußteil 2 einer weiteren Beprobungsvorrichtung 1 aufzunehmen, um diese aufeinander zu stapeln (vgl. Fig. 9). Durch die Stützfüße 76 wird einerseits eine formschlüssige Halterung des Fußteils 2 der auf der Haube 24 gestapelten weiteren Beprobungsvorrichtung 1 erreicht. Andererseits beabstanden die Stützfüße 76 das Fußteil 2 auch in vertikaler Richtung von dem Haubendach 70, sodass eine Belüftung von Keimlingen 100 im Inneren der Haube 24 möglich ist.

Zur weiteren Belüftung weist die Haube 24 im Haubendach 70 Lüftungslöcher 78 auf (in Figur 7a, 7b nur jeweils eines mit Bezugszeichen versehen), sowie sowohl am Übergang zwischen Haubendach 70 und Seitenwand 72 Lüftungsschlitze 80 als auch direkt in die Seitenwand 72 eingebrachte Lüftungsschlitze 82.

Mit Bezug auf Figur 8a wird nun der Schneidprozesse beschrieben. Um die Keimlinge 100 zu zertrennen muss zunächst die Haube 24 abgenommen werden, sodass der Schlitz S zwischen dem Schneidbrett-Unterteil 6 und dem Schneidbrett-Oberteil 10 zugänglich ist. Anschließend ist es möglich, die Beprobungsvorrichtung 1 um 180° zu drehen, sodass die Aufnahmebehälter 20 mit ihren Öffnungen nach oben zeigen und die Keimlinge 100 auf dem Kopf stehen. Dies ist nicht zwingend erforderlich, sorgt aber dafür, dass die Keimlinge 100 nach dem Zertrennen direkt in die entsprechenden Aufnahmebehälter 20 fallen. Auf diese Weise ist der Schneidprozess, der in Figur 8a dargestellt ist, durchgeführt. Es soll aber verstanden werden, dass es auch möglich ist den Schneidprozess durchzuführen, wenn die Beprobungsvorrichtung 1 mit dem Fußteil 2 auf einem Boden aufgestellt ist.

Zum Zertrennen der Keimlinge 100 wird die Schneide 14 in den Spalt S eingeschoben, wie durch den Pfeil 84 (vgl. Fig. 8a) angedeutet. Die Schneide 14 hat eine Schneidkante 14a, die nach und nach die einzelnen Keimlinge 100 (in Fig. 8a beispielhaft nur zwei dargestellt) zertrennt. In der dargestellten Ausführungsform trennt die Schneide 14 die Keimlinge 100 am Spross 102, sodass die Wurzel 104 in der entsprechenden Vertiefung 46 des Keimträgers 22 verbleibt. Die Schneide 14 deckt mit ihrem Grundkörper 54 die einzelnen Durchlässe 8 der ersten Mehrzahl an Durchlässen und die Durchlässe 12 der zweiten Mehrzahl an Durchlässen ab, sodass auch kein Wurzelmaterial von der Wurzel 104 durch die Durchlässe 8, 12 in die Aufnahmebehälter 20 fallen kann. Dies ist anschaulich an dem in Figur 8 linken Keimling 100 zu sehen, der bereits durch die Schneide 14 zertrennt worden ist. Nachdem die Schneide 14 dann vollständig eingeschoben wurde, kann die Anordnung bestehend aus Fußteil 2, Keimträger 22, Schneidbrett-Unterteil 6, Schneidbrett-Oberteil 10, Schneide 14 sowie den Wurzeln 104 in den Vertiefungen 46 entnommen werden. Zurück bleiben die Aufnahmebehälter 20, in dem dargestellten Ausführungsbeispiel das Tube-Rack 62.

Figur 8b zeigt nun ein zweites Ausführungsbeispiel, bei dem keine Schneide 14 zum Zertrennen der Keimlinge 100 eingeschoben wird, sondern das Schneidbrett-Unterteil 6 und das Schneidbrett-Oberteil 10 gegeneinander verschoben werden, um so die jeweiligen Keimlinge 100 zu zertrennen.

Zwischen dem Schneidbrett-Oberteil 10 und dem Schneidbrett-Unterteil 6 ist in diesem Ausführungsbeispiel nicht notwendigerweise ein Spalt S gebildet (vgl. Fig. 8a). Es ist vielmehr möglich, dass das Schneidbrett-Oberteil 10 mit seiner unteren Oberfläche 110 auf einer oberen Oberfläche 112 des Schneidbrett-Unterteils 6 aufliegt. Das Schneidbrett-Oberteil 10 hat seitlich eine erste und eine zweite Schiene 114, 116 (vgl. Fig. 6), die mit der Führung 48 am Schneidbrett-Unterteil 6 zusammenwirken können. Das Schneidbrett-Oberteil 10 kann also an dem Schneidbrett-Unterteil 6 geführt und gegenüber diesem verschoben werden, wobei ein Abheben verhindert ist. Der Anschlag 52 dient auch als Anschlag für das Schneidbrett-Oberteil 10. Wenn dieses an dem Anschlag 52 anliegt, sind die Durchlässe 8 mit den Durchlässen 12 ausgerichtet.

In der um 180° gedrehten Stellung der Beprobungsvorrichtung 1 (vgl. Fig. 8b) kann nun das Schneidbrett-Oberteil 10 samt Aufnahmebehälter 20 (bzw. Rack 62) gegenüber dem Schneidbrett-Unterteil 6 (samt Keimträger 22 und Fußteil 2) verschoben werden, wie durch den Pfeil 118 angezeigt. Selbstverständlich ist es auch möglich, das Schneidbrett-Unterteil 6 gegenüber dem Schneidbrett-Oberteil 10 zu verschieben, bzw. beide um einen gewissen Betrag; entscheidend ist lediglich, dass diese relativ zueinander verschoben werden.

Die Durchlässe 8 der ersten Mehrzahl an Durchlässen sind leicht konisch bzw. kegelstumpfförmig gebildet (vgl. oben) und weisen an ihrer engsten Stelle einen Rand 120 auf, der in dieser Ausführungsform vorzugsweise als Schneide 121 ausgebildet ist. Dazu muss dieser nicht gesondert verstärkt werden, wobei ein verhältnismäßig kleiner Radius an der Kante bevorzugt ist. Werden nun das Schneidbrett-Oberteil 10 und das Schneidbrett-Unterteil 6 gegeneinander verschoben während sich ein Keimling 100 durch die Durchlässe 8, 12 hindurcherstreckt, wird der Keimling 100 im Bereich des Sprosses 102 durchtrennt. Das Schneidbrett-Oberteil 10 und das Schneidbrett-Unterteil 6 wirken hier als Scheren zusammen.

Die lichte Weite w (vgl. Fig. 2) der Durchlässe 8 der ersten Mehrzahl an Durchlässen ist in diesem Ausführungsbeispiel (Fig. 8b) kleiner als ein Durchmesser B (vgl. Fig. 2) eine Stegs 122 zwischen den Durchlässen 12 der zweiten Mehrzahl an Durchlässen. Dadurch ist es möglich, dass die Stege 122 in der verschobenen Position (vgl. Fig. 8b) des Schneidbrett-Oberteils 10 und des Schneidbrett-Unterteils 6 zueinander die Durchlässe 8 der ersten Mehrzahl an Durchlässen verschließen. Hierdurch kann Kontamination verhindert werden. Vorzugsweise weist die Beprobungsvorrichtung 1 einen weiteren Anschlag oder einen Indikator für die verschobene (wie in Fig. 8b gezeigte) Stellung des Schneidbrett-Oberteils 10 und Schneidbrett-Unterteils 6 zueinander auf. Dieser weitere Anschlag oder Indikator (in den Figuren nicht gezeigt) kann dem Schneidbrett-Oberteil 10, dem Schneidbrett-Unterteil 6, oder einem anderen Bauteil, beispielsweise dem Fußteil 2, ausgebildet sein. Es ist nicht erforderlich, dass dieser weitere Anschlag ein Weiterschieben vollständig verhindert, vielmehr ist ausreichend, wenn einem Bediener ein Hinweis gegeben wird, dass die verschobene Stellung erreicht wurde. Der weitere Anschlag kann also auch als leichte Vertiefung oder kleiner Vorsprung ausgebildet sein, der dem Bediener eine taktile Rückmeldung gibt. Ein Indikator kann beispielsweise jeweils eine an einem seitlichen Abschnitt von Schneidbrett-Oberteil 10 und Schneidbrett-Unterteil 6 aufgebrachte farbige Markierung umfassen, die durch das Verschieben in Übereinstimmung miteinander gebracht werden, sodass ein Bediener das Erreichen der korrekten Position visuell wahrnehmen kann.

In der verschobenen Stellung (Fig. 8b) kann nun die Anordnung mit Fußteil 2, Keimträger 22, Schneidbrett-Unterteil 6 und Schneidbrett-Oberteil 10 als Einheit von den Aufnahmebehältern 20 abgenommen und entfernt werden. Dabei bleiben die Vertiefungen 46 und die Durchlässe 8 der ersten Mehrzahl an Durchlässen verschlossen und Material aus den Vertiefungen 46 kann nicht durch die Durchlässe 8 fallen.

Alternativ ist es auch möglich, ein Trennelement (in den Figuren nicht gezeigt) zwischen Schneidbrett-Oberteil 10 und Schneidbrett-Unterteil 6 einzuschieben, um die Durchlässe 8 sicher zu verschließen. Ein solches Trennelement kann in seiner Konfiguration im Wesentlichen der Schneide 14 bzw. dem Messer 15 entsprechen, wobei es aus einem weicheren Material, wie einem dünnen Kunststoff, gebildet sein kann, da es keine Schnittreaktionskräfte aufnehmen muss.

Figur 9 zeigt schließlich eine Anordnung aus einer Mehrzahl an Beprobungsvorrichtungen 1 gemäß der vorliegenden Offenbarung. In Figur 9 sind insgesamt 27 Beprobungsvorrichtungen 1 gezeigt, wobei jeweils drei Beprobungsvorrichtungen 1 aufeinander gestapelt sind. So steht jede Beprobungsvorrichtungen 1 mit ihrem Fußteil 2 auf der Haube 24 einer darunter stehenden Beprobungsvorrichtungen 1. Auf diese Weise können Keimlinge 100 platzsparend getestet werden.

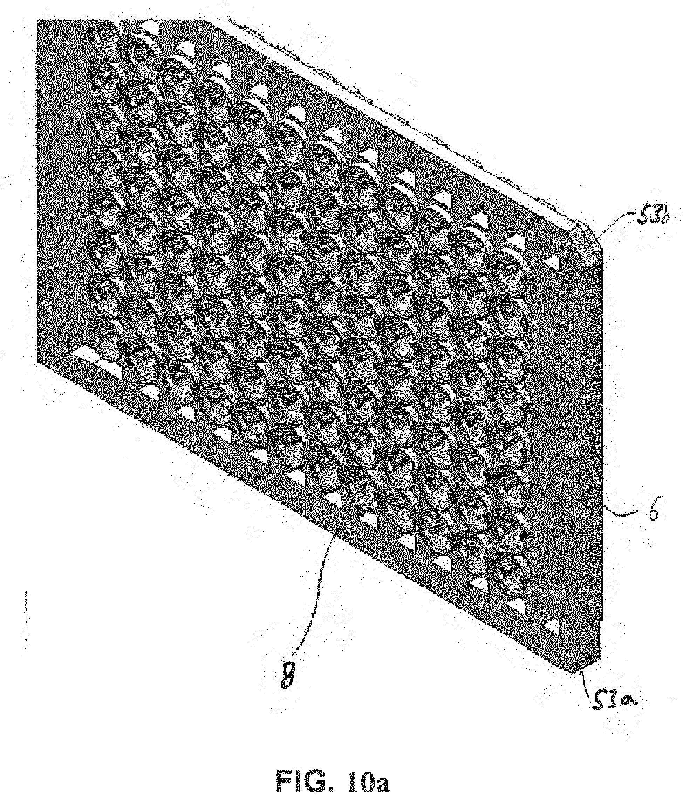

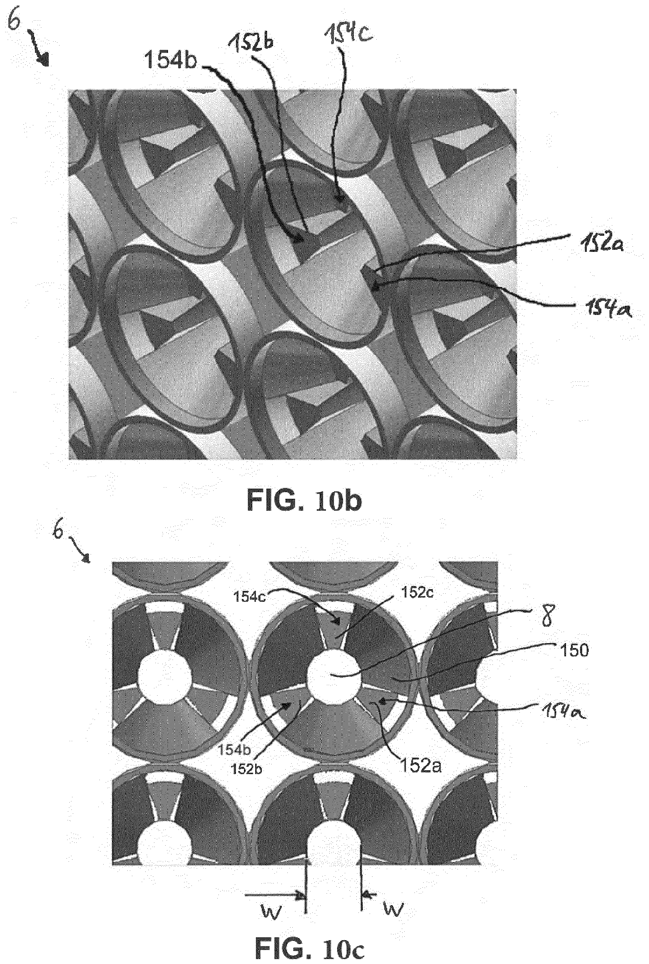

Die Figuren 10a bis 10c zeigen ein Schneidbrett-Unterteil 6 in einer Variante. Während das weiter oben mit Bezug auf die Figuren 5a bis 5c beschriebene Schneidbrett-Unterteil 6 Durchlässe 8 aufweist, die im Wesentlichen konisch bzw. kegelstumpfförmig zulaufen und im Querschnitt senkrecht zur Zentralachse jeweils eine kreisförmige Form haben, haben die Durchlässe 8 gemäß dieser Variante (Figuren 10a bis 10c) eine Form 150, die von der Kreisform abweicht. Es hat sich herausgestellt, dass bei pilliertem Saatgut das Problem eines Verdeckens der Durchlässe 8 der ersten Mehrzahl an Durchlässen auftauchen kann, nämlich dann, wenn der Keimling 100 nicht rechtzeitig durch den entsprechenden Durchlass 8 wächst und stattdessen die Pille (Samen 101) angehoben wird und so den Durchlass 8 blockiert. Dieses Problem kann durch einen Querschnitt des Durchlasses 8 verhindert werden, der von der Kreisform abweicht, sodass zwischen Wand des Durchlasses 8 und der Saatgut-Pille stets noch eine Lücke bleibt. Konkret weisen die Durchlässe 8 dazu in der vorliegenden Ausführungsform drei Nasen 152a, 152b, 152c auf, die jeweils um 120° versetzt von der in der Grundform kegelstumpfförmig gebildeten Wand des Durchlasses 8 nach Innen ragen. Sie lassen dabei einen Querschnitt frei, der im Wesentlichen der lichten Weise W entspricht (vgl. Fig. 10c). Die Nasen 152a, 152b, 152c verhindern ein weites Anheben der Pille und letztlich so ein Verstopfen des Durchlasses 8. Die Pille kann maximal bis zu der Stirnseite 154a, 154b, 154c der jeweiligen Nase 152a, 152b, 152c angehoben werden, sodass stets eine Lücke, gebildet durch die Pille, die Nasen 152a, 152b, 152c und die Wand des Durchlasses 8 frei bleibt, durch die der jeweilige Keimling 100 wachsen kann.

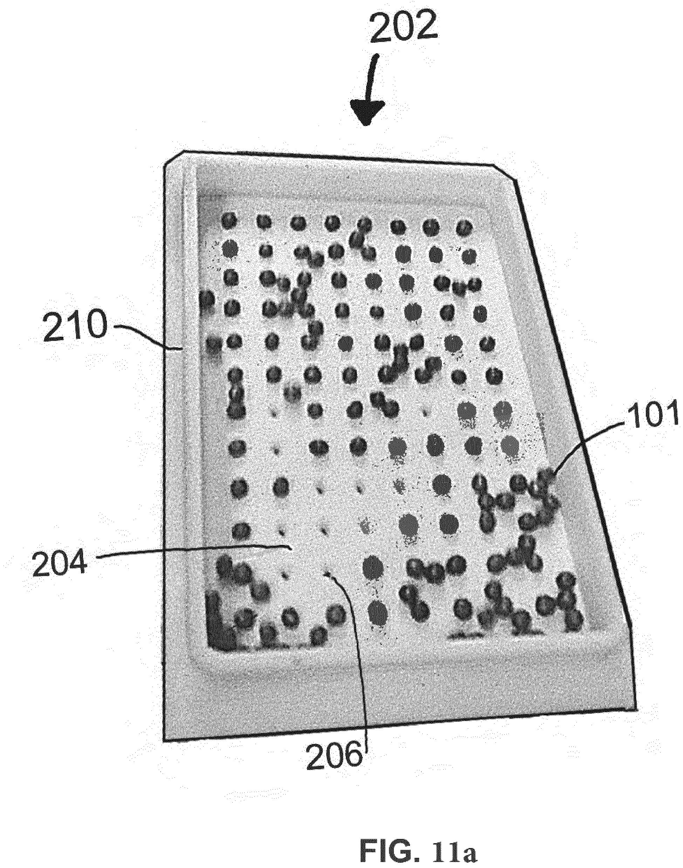

Die Figuren 11a bis 11d zeigen eine Einfülleinheit 200, die vorgesehen ist, den Keimträger 22 zu befüllen.

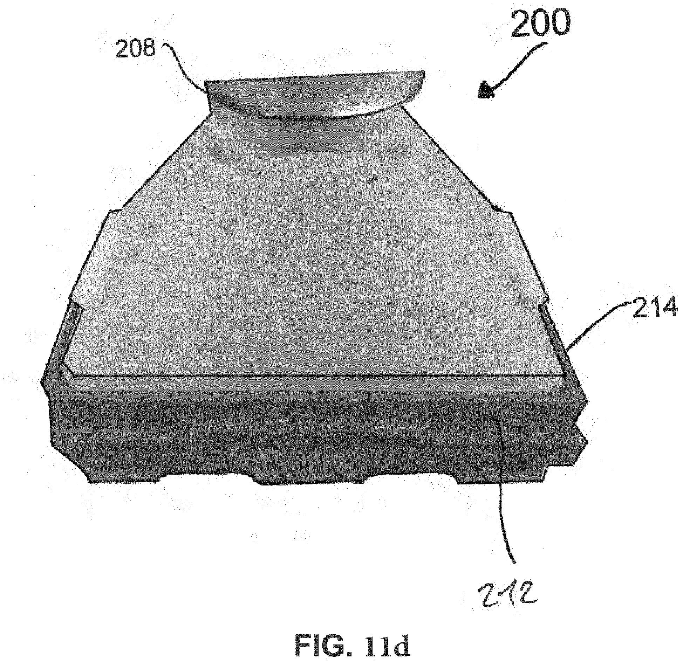

Die Einfülleinheit 200 wird insbesondere dann verwendet, wenn Samen 101 als Ausgangsmaterial zum Einsatz kommen. Die Einfülleinheit 200 umfasst eine Saugkopf 202 mit einer Aufnahmeplatte 204, die in etwa der äußeren Form des Keimträgers 22 entspricht. In der Aufnahmeplatte ist eine vierte Mehrzahl an Durchlässen 206 eingebracht, die mit den Vertiefungen 46 in dem Keimträger 22 korrespondieren, also in dieser Ausführungsform im 96-Well-Format angeordnet sind (in Fig. 11a ist nur ein Durchlass 206 mit Bezugszeichen versehen). Die Durchlässe 206 stehen in fluidischer Verbindung mit einem Unterdruckanschluss 208 (vgl. Fig. 11d), an den eine Unterdruckquelle anschließbar ist. Über den Unterdruckanschluss 208 wird an den Durchlässen 206 ein Unterdruck bereitgestellt.

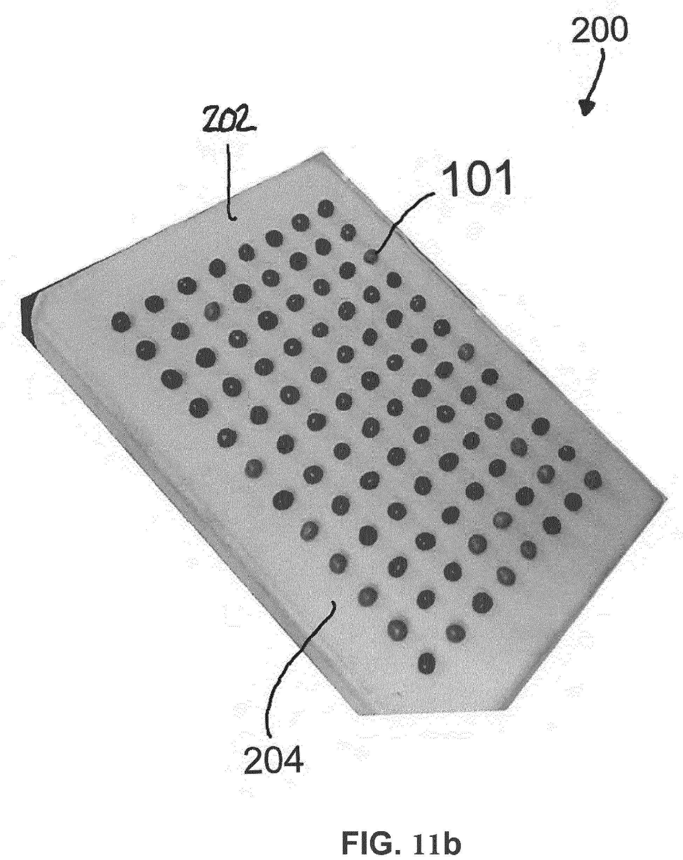

In Fig. 11a ist ferner ein Rahmen 210 temporär befestigt. Der Rahmen 210 bildet eine seitliche Begrenzung für die Aufnahmeplatte 204. Zum Versehen eines jeden Durchlasses 206 mit einem Samen 101 kann der Saugkopf 202, mit daran aufgesetztem Rahmen 210 mit der Aufnahmeplatte 204 nach oben gedreht und eine Anzahl an Samen 101 (vorzugsweise 96 Stück) wird in die so gebildete Wanne gegeben. Durch entsprechendes Schwenken können nun die einzelnen Samen 101 zu den Durchlässen 206 bewegt werden, wo sie aufgrund des Unterdrucks festgehalten werden. Ist dieser Schritt erfolgt kann sodann der Rahmen 210 entfernt werden, sodass sich eine Ansicht wie in Fig. 11b ergibt.

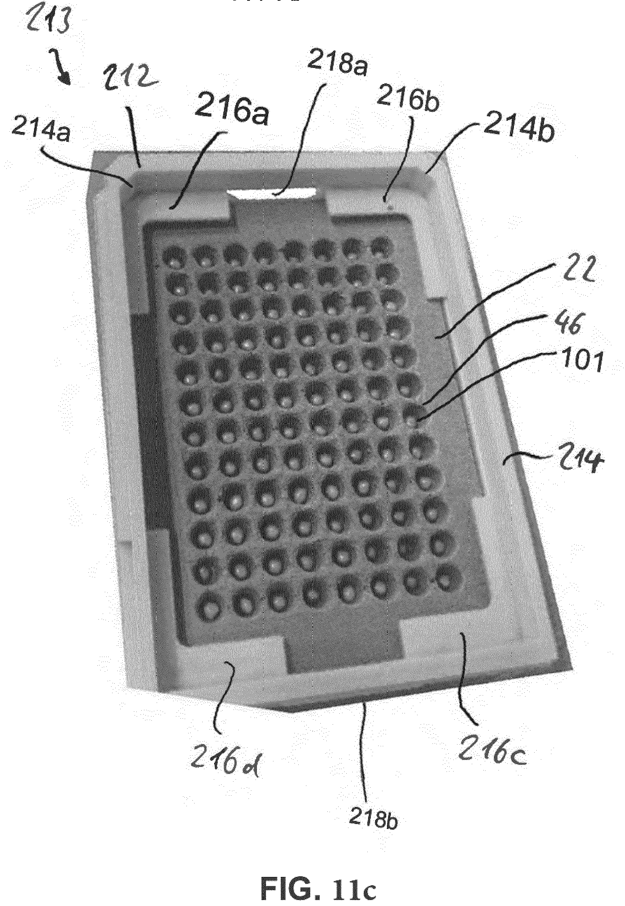

Figur 11c illustriert nun einen Keimträger 22, wobei hier bereits Samen 101 in den Vertiefungen 46 angeordnet sind. Auf dem Keimträger ist zudem ein Abstandshalter 212 angeordnet, der dort ebenfalls nur temporär und nur für die Zwecke der Befüllung der Vertiefungen 46 aufgesetzt ist. Der Abstandshalter 212 ist wiederum in Form eines Rahmens 214 und bildet so eine Führung für den Saugkopf 202, so dass die Durchlässe 206 genau mit den Vertiefungen 46 ausgerichtet sind. Dazu weist der Saugkopf 202 wiederum die schon oben beschriebenen Abflachungen 214a, 214b als Montagehilfseinrichtung 213 auf. Ferner weist der Abstandshalter 212 wenigstens einen, hier vier Anschläge 216a, 216b, 216c, 216d auf, die einen vertikalen Abstand zu der oberen Oberfläche des Keimträgers 22 definieren. Dieser vertikale Abstand kann beispielsweise in einem Bereich von ca. 1 cm bis 2 cm sein. Ferner weist der Abstandshalter 212 Belüftungsöffnungen 218a, 218b auf, um ein Festsaugen des Saugkopfes 202 an dem Keimträger 22 zu verhindern.

## Patentansprüche

1. Beprobungsvorrichtung (1) zum Anziehen und Beproben von Keimlingen (100) von Pflanzen, mit einem Fußteil (2), und einer Schneideinrichtung (4) zum Zertrennen von Keimlingen (100) oberhalb der Wurzel (104), vorzugsweise im Bereich des Sprosses (102), besonders bevorzugt im Bereich des Hypokotyls,
wobei die Schneideinrichtung (4) ein Schneidbrett-Unterteil (6) und ein auf dem Schneidbrett-Unterteil (6) angeordnetes Schneidbrett-Oberteil (10) aufweist, die zum Zertrennen der Keimlinge (100) gegeneinander verschiebbar sind oder zwischen denen eine Schneide (14) zum Zertrennen der Keimlinge (100) einschiebbar ist,
wobei das Schneidbrett-Unterteil (6) eine erste Mehrzahl an Durchlässen (8) und das Schneidbrett-Oberteil (10) eine zweite Mehrzahl an Durchlässen (12) aufweist, und die erste Mehrzahl an Durchlässen (8) mit der zweiten Mehrzahl an Durchlässen (12) ausgerichtet sind, und wobei das Schneidbrett-Oberteil (10) an wenigstens einem der Durchlässe (12) der zweiten Mehrzahl an Durchlässen wenigstens ein Positionierelement (16) zum Positionieren von Aufnahmebehältern (20) zum Aufnehmen der abgetrennten Sprosse (102) oder Sprossteile der Keimlinge (100) aufweist, **dadurch gekennzeichnet, dass** sich die Durchlässe (8) der ersten Mehrzahl an Durchlässen im Schneidbrett-Unterteil (6) zum Schneidbrett-Oberteil (10) hin verjüngen und einen Querschnitt mit einer lichten Weite (W) haben, die ausgewählt ist zum Abstreifen von Perikarp von den Keimlingen (100) und in einem Bereich von 1 mm bis 6 mm liegt.

2. Beprobungsvorrichtung nach Anspruch 1, ferner aufweisend einen Keimträger (22) für Samen oder Keimlinge (100), der zwischen dem Fußteil (2) und der Schneideinrichtung (4) angeordnet ist und vorzugsweise aus einem saugfähigen Material zum Speichern von Flüssigkeit gebildet ist.

3. Beprobungsvorrichtung nach Anspruch 2, wobei der Keimträger (22) eine dritte Mehrzahl an Vertiefungen (46) aufweist, wobei Zentralachsen der dritten Mehrzahl an Vertiefungen (46) mit der ersten Mehrzahl an Durchlässen (8) fluchten.

4. Beprobungsvorrichtung nach einem der vorstehenden Ansprüche, wobei die Aufnahmebehälter (20) als einseitig offene Laborröhrchen (Tubes) ausgebildet und in einem Halter (62) (Rack) mit ihrer Öffnung proximal zu dem Schneidbrett-Oberteil (10) gehalten sind.

5. Beprobungsvorrichtung nach einem der vorstehenden Ansprüche, wobei die Schneideinrichtung (4) eine Führung (48) für die Schneide (14) oder eine Führung (48) für das Verschieben des Schneidbrett-Oberteil (10) zu dem Schneidbrett-Unterteil (6) aufweist.

6. Beprobungsvorrichtung nach einem der vorstehenden Ansprüche, wobei die Schneide (14) so dimensioniert ist, dass jeder Durchlass (8) der ersten Mehrzahl an Durchlässen (8) bei einem Einschieben der Schneide (14) zumindest einmalig vollständig abdeckbar ist und/oder die Schneide (14) so dimensioniert ist, dass in einem eingeschobenen Zustand die erste Mehrzahl an Durchlässen (8) vollständig abdeckbar ist.

7. Beprobungsvorrichtung nach einem der vorstehenden Ansprüche, wobei die Durchlässe (8) der ersten Mehrzahl an Durchlässen einen Querschnitt mit einer lichten Weite (W) haben, die etwa 3 mm beträgt.

8. Beprobungsvorrichtung nach einem der vorstehenden Ansprüche, wobei die Positionierelemente (16) Abstandshalter (60) zum Beabstanden der Aufnahmebehälter (20) von dem Schneidbrett-Oberteil (10) aufweisen.

9. Beprobungsvorrichtung nach einem der vorstehenden Ansprüche, ferner aufweisend eine Haube (24) zum Abdecken wenigstens der Schneideinrichtung (4) samt Keimlingen (100).

10. Beprobungsvorrichtung nach einem der vorstehenden Ansprüche, ferner aufweisend eine Montagehilfseinrichtung (40) die ein seitenvertauschtes Montieren wenigstens der Schneideinrichtung (4) zum Fußteil (2) verhindert.

11. Beprobungsvorrichtung nach einem der vorstehenden Ansprüche, wobei die Durchlässe (8) der ersten Mehrzahl an Durchlässen kegelstumpfförmig gebildet sind, und eine oder mehr, vorzugsweise zwei oder mehr, besonders bevorzugt drei oder mehr sich nach innen erstreckende Nasen (152a, 152b, 152c) aufweisen.

12. Verfahren zum Anziehen und Beproben von Keimlingen (100) einer Pflanze mit einer Beprobungsvorrichtung (1) nach einem der vorstehenden Ansprüche 1 bis 11, umfassend die Schritte:
- Bereitstellen oder Anziehen von Keimlingen (100) vorzugsweise aus Samen (101);
- Warten bis sich die Keimlinge (100) durch die erste als auch durch die zweite Mehrzahl an Durchlässen (8, 12) durch erstrecken;
- Einschieben der Schneide (14) zwischen dem Schneidbrett-Unterteil (6) und dem Schneidbrett-Oberteil (10) zum Zertrennen der Keimlinge (100) oberhalb der Wurzel (104) oder Verschieben des Schneidbrett-Oberteils (10) gegenüber dem Schneidbrett-Unterteil (6) zum Zertrennen der Keimlinge (100) oberhalb der Wurzel (104);
- Aufnehmen von abgetrennten Sprossen (102) oder Sprossteilen der Keimlinge (100) in jeweils einem Aufnahmebehälter (20); und
- Entnehmen der Aufnahmebehälter (20) aus der Beprobungsvorrichtung (1), wobei das Perikarp der Keimlinge oder Teile davon unterhalb der Schneide (14) abgestreift wird.

13. Verfahren nach Anspruch 12, wobei die Pflanze ausgewählt ist aus den Gattungen: Hordeum, Sorghum, Saccharum, Zea, Setaria, Oryza, Triticum, Secale, Triticale, Malus, Brachypodium, Aegilops, Daucus, Beta, Eucalyptus, Nicotiana, Solanum, Coffea, Vitis, Erythrante, Genlisea, Cucumis, Marus, Arabidopsis, Crucihimalaya, Cardamine, Lepidium, Capsella, Olmarabidopsis, Arabis, Brassica, Eruca, Raphanus, Citrus, Jatropha, Populus, Medicago, Cicer, Cajanus, Phaseolus, Glycine, Gossypium, Astragalus, Lotus, Torenia, Allium, und/oder Helianthus, vorzugsweise ist die Pflanze ausgewählt aus den Spezies: *Hordeum vulgare, Hordeum bulbusom, Sorghum bicolor, Saccharum officinarium, Zea* spp., umfassend *Zea mays, Setaria italica, Oryza minuta, Oryza sativa, Oryza australiensis, Oryza alta, Triticum aestivum, Triticum durum, Secale cereale,* Triticale, *Malus domestica, Brachypodium distachyon, Hordeum marinum, Aegilops tauschii, Daucus glochidiatus, Beta* spp., umfassend *Beta vulgaris, Daucus pusillus, Daucus muricatus, Daucus carota, Eucalyptus grandis, Nicotiana sylvestris, Nicotiana tomentosiformis, Nicotiana tabacum, Nicotiana benthamiana, Solanum lycopersicum, Solanum tuberosum, Coffea canephora, Vitis vinifera, Erythrante guttata, Genlisea aurea, Cucumis sativus, Marus notabilis, Arabidopsis arenosa, Arabidopsis lyrata, Arabidopsis thaliana, Crucihimalaya himalaica, Crucihimalaya wallichii, Cardamine nexuosa, Lepidium virginicum, Capsella bursa pastoris, Olmarabidopsis pumila, Arabis hirsute, Brassica napus, Brassica oleracea, Brassica rapa, Raphanus sativus, Brassica juncacea, Brassica nigra, Eruca vesicaria subsp. sativa, Citrus sinensis, Jatropha curcas, Populus trichocarpa, Medicago truncatula, Cicer yamashitae, Cicer bijugum, Cicer arietinum, Cicer reticulatum, Cicer judaicum, Cajanus cajanifolius, Cajanus scarabaeoides, Phaseolus vulgaris, Glycine max, Gossypium* sp., *Astragalus sinicus, Lotus japonicas, Torenia fournieri, Allium cepa, Allium fistulosum, Allium sativum, Helianthus annuus, Helianthus tuberosus und*/*oder Allium tuberosum,* besonders bevorzugt sind *Beta vulgaris, Zea mays, Triticum aestivum, Hordeum vulgare, Secale cereale, Helianthus annuus, Solanum tuberosum, Sorghum bicolor, Brassica rapa, Brassica napus, Brassica juncacea, Brassica oleracea, Raphanus sativus, Oryza sativa, Glycine max* und/oder *Gossypium* sp.

## Claims

1. Sampling apparatus (1) for collecting and sampling germ buds (100) of plants von plants, with a foot part (2), and a cutting device (4) for separating germ buds (100) above the root (104), preferably in the region of the shoot (102), particularly preferably in the region of the hypocotyl,
wherein the cutting device (4) has a cutting board lower part (6) and a cutting board upper part (10) arranged on the cutting board lower part (6), which are displaceable relative to each other in order to separate the germ buds (100), or between which a cutting edge (14) can be inserted in order to separate the germ buds (100),
wherein the cutting board lower part (6) has a first plurality of passages (8) and the cutting board upper part (10) has a second plurality of passages (12), and the first plurality of passages (8) is aligned with the second plurality of passages (12), and wherein the cutting board upper part (10) has at least one positioning element (16) for positioning receptacles (20) on at least one of the passages (12) of the second plurality of passages to accommodate the separated shoots (102) or parts of the shoots of the germ buds (100),
**characterized in that** the passages (8) of the first plurality of passages in the cutting board lower part (6) are tapered towards the cutting board upper part (10) and have a cross section with a bore (W) which is selected so as to scrape the pericarp off the germ buds (100) and has a dimension in the range from 1 mm to 6 mm.

2. Sampling apparatus according to Claim 1, further having a seed carrier (22) for seeds or germ buds (100), which is arranged between the foot part (2) and the cutting device (4) and is preferably made from an absorbent material for storing liquid.

3. Sampling apparatus according to Claim 2, wherein the seed carrier (22) has a third plurality of recesses (46), wherein central axes of the third plurality of recesses (46) line up with the first plurality of passages (8).

4. Sampling apparatus according to any one of the preceding claims, wherein the receptacles (20) are embodied as open test tubes and are retained in a rack (62) with their openings proximal to the cutting board upper part (10).

5. Sampling apparatus according to any one of the preceding claims, wherein the cutting device (4) has a guide (48) for the cutting edge (14) or a guide (48) for moving the cutting board upper part (10) towards the cutting board lower part (6).

6. Sampling apparatus according to any one of the preceding claims, wherein the cutting edge (14) is dimensioned such that each passage (8) of the first plurality of passages (8) can be completely covered at least once when the cutting edge (14) is inserted, and/or the cutting edge (14) is dimensioned such that the first plurality of passages (8) can be completely covered when the cutting edges is in the inserted state.

7. Sampling apparatus according to any one of the preceding claims, wherein the passages (8) of the first plurality of passages have a cross section with a bore (W) of about 3 mm.

8. Sampling apparatus according to any one of the preceding claims, wherein the positioning elements (16) include spacers (60) for keeping the receptacles (20) at a distance from the cutting board upper part (10).

9. Sampling apparatus according to any one of the preceding claims, further having a hood (24) for covering at least the cutting device (4) together with the germ buds (100).

10. Sampling apparatus according to any one of the preceding claims, further having an assembly aid (40) which prevents at least the cutting device (4) from being assembled with the foot part (2) the wrong way round.

11. Sampling apparatus according to any one of the preceding claims, wherein the passages (8) of the first plurality of passages have the form of truncated cones, and one or more, preferably two or more, particularly preferably three or more have inwardly extending lugs (152a, 152b, 152c).

12. Method for collecting and sampling germ buds (100) of a plant with a sampling apparatus (1) according to any one of the preceding Claims 1 to 11, comprising the steps:
- providing or collecting germ buds (100), preferably from seeds (101);
- waiting until the germ buds (100) grow through both the first and the second pluralities of passages (8, 12);
- inserting the cutting edge (14) between the cutting board lower part (6) and the cutting board upper part (10) to separate the germ buds (100) above the root (104), or displacing the cutting board upper part (10) relative to the cutting board lower part (6) to separate the germ buds (100) above the root (104);
- receiving separated shoots (102) or parts of shoots of the germ buds (100) in a separate receptacle (20) for each; and
- removing the receptacles (20) from the sampling apparatus (1),
wherein the pericarp of the germ buds or a part thereof is stripped off below the cutting edge (14).

13. Method according to Claim 12, wherein the plant is selected from the genera: Hordeum, Sorghum, Saccharum, Zea, Setaria, Oryza, Triticum, Secale, Triticale, Malus, Brachypodium, Aegilops, Daucus, Beta, Eucalyptus, Nicotiana, Solanum, Coffea, Vitis, Erythrante, Genlisea, Cucumis, Marus, Arabidopsis, Crucihimalaya, Cardamine, Lepidium, Capsella, Olmarabidopsis, Arabis, Brassica, Eruca, Raphanus, Citrus, Jatropha, Populus, Medicago, Cicer, Cajanus, Phaseolus, Glycine, Gossypium, Astragalus, Lotus, Torenia, Allium, and/or Helianthus, wherein the plant is preferably selected from the species: *Hordeum vulgare, Hordeum bulbusom, Sorghum bicolor, Saccharum officinarium, Zea* spp., including *Zea mays, Setaria italica, Oryza minuta, Oryza sativa, Oryza australiensis, Oryza alta, Triticum aestivum, Triticum durum, Secale cereale,* Triticale, *Malus domestica, Brachypodium distachyon, Hordeum marinum, Aegilops tauschii, Daucus glochidiatus, Beta* spp., including *Beta vulgaris, Daucus pusillus, Daucus muricatus, Daucus carota, Eucalyptus grandis, Nicotiana sylvestris, Nicotiana tomentosiformis, Nicotiana tabacum, Nicotiana benthamiana, Solanum lycopersicum, Solanum tuberosum, Coffea canephora, Vitis vinifera, Erythrante guttata, Genlisea aurea, Cucumis sativus, Marus notabilis, Arabidopsis arenosa, Arabidopsis lyrata, Arabidopsis thaliana, Crucihimalaya himalaica, Crucihimalaya wallichii, Cardamine nexuosa, Lepidium virginicum, Capsella bursa pastoris, Olmarabidopsis pumila, Arabis hirsute, Brassica napus, Brassica oleracea, Brassica rapa, Raphanus sativus, Brassica juncacea, Brassica nigra, Eruca vesicaria subsp. sativa, Citrus sinensis, Jatropha curcas, Populus trichocarpa, Medicago truncatula, Cicer yamashitae, Cicer bijugum, Cicer arietinum, Cicer reticulatum, Cicer judaicum, Cajanus cajanifolius, Cajanus scarabaeoides, Phaseolus vulgaris, Glycine max, Gossypium* sp., *Astragalus sinicus, Lotus japonicas, Torenia fournieri, Allium cepa, Allium fistulosum, Allium sativum, Helianthus annuus, Helianthus tuberosus* and/or *Allium tuberosum,* particularly preferable are *Beta vulgaris, Zea mays, Triticum aestivum, Hordeum vulgare, Secale cereale, Helianthus annuus, Solanum tuberosum, Sorghum bicolor, Brassica rapa, Brassica napus, Brassica juncacea, Brassica oleracea, Raphanus sativus, Oryza sativa, Glycine max* and/or *Gossypium* sp.

## Revendications

1. Dispositif d'échantillonnage (1) pour l'extraction et l'échantillonnage de plantule (100) de plantes, comportant un élément pied (2), et un dispositif de coupe (4) pour le sectionnement de plantules (100) au-dessus de la racine (104), de préférence au niveau de la pousse (102), très préférentiellement au niveau de l'hypocotyle, dans lequel
le dispositif de coupe (4) présente une partie inférieure de planche à découper (6) et une partie supérieure de planche à découper (10) disposée sur la partie inférieure de planche à découper (6) qui, pour le sectionnement des plantules (100), sont déplaçables l'une vers l'autre ou entre lesquelles une lame (14) peut être glissée pour sectionner les plantules (100),
la partie inférieure de planche à découper (6) présente une première pluralité de passages (8) et la partie supérieure de planche à découper (10) une deuxième pluralité de passages (12), et la première pluralité de passages (8) sont alignés avec la deuxième pluralité de passages (12), et la partie supérieure de planche à découper (10) présente, au niveau d'au moins un des passages (12) de la deuxième pluralité de passages, au moins un élément de positionnement (16) pour le positionnement de contenants récepteurs (20) destinés à recevoir les pousses sectionnées (102) ou des parties de pousses des plantules (100),
**caractérisé en ce que** les passages (8) de la première pluralité de passages de la partie inférieure de planche à découper (6) se rétrécissent en direction de la partie supérieure de planche à découper (10) et ont une section transversale d'un diamètre intérieur (W) qui est sélectionné pour racler le péricarpe des plantules (100) et se situe dans une fourchette de 1 mm à 6 mm.

2. Dispositif d'échantillonnage selon la revendication 1, présentant en outre un support de plantules (22) pour des graines ou des plantules (100), qui est disposé entre l'élément pied (2) et le dispositif de coupe (4) et est de préférence composé d'un matériau absorbant pour l'accumulation d'humidité.

3. Dispositif d'échantillonnage selon la revendication 2, dans lequel le support de plantules (22) présente une troisième pluralité de creux (46), les axes centraux de la troisième pluralité de creux (46) étant alignés avec la première pluralité de passages (8).

4. Dispositif d'échantillonnage selon une des revendications précédentes, dans lequel les contenants récepteurs (20) sont réalisés sous forme d'éprouvettes de laboratoire (tubes) ouvertes un côté et sont retenus dans un support (62) (rack) avec leur ouverture proximale par rapport à la partie supérieure de planche découper (10).

5. Dispositif d'échantillonnage selon une des revendications précédentes, dans lequel le dispositif de coupe (4) présente un guide (48) pour la lame (14) ou un guide (48) pour déplacer la partie supérieure de planche à découper (10) vers la partie inférieure de planche à découper (6).

6. Dispositif d'échantillonnage selon une des revendications précédentes, dans lequel la lame (14) est dimensionnée de manière à ce que chaque passage (8) de la première pluralité de passages (8), lors d'une insertion de la lame (14), puisse être recouvert entièrement au moins une fois et/ou que la lame (14) est dimensionnée de manière à ce que, dans un état inséré, la première pluralité de passages (8) puissent être entièrement recouverts.

7. Dispositif d'échantillonnage selon une des revendications précédentes, dans lequel les passages (8) de la première pluralité de passages ont une section transversale d'un diamètre intérieur (W) qui s'élève à environ 3 mm.

8. Dispositif d'échantillonnage selon une des revendications précédentes, dans lequel les éléments de positionnement (16) présentent des écarteurs (60) pour écarter les contenants récepteurs (20) de la partie supérieure de planche à découper (10).

9. Dispositif d'échantillonnage selon une des revendications précédentes, présentant en outre un capot (24) pour recouvrir au moins le dispositif de coupe (4) et les plantules (100).

10. Dispositif d'échantillonnage selon une des revendications précédentes, présentant en outre un dispositif d'aide au montage (40) qui empêche un montage du mauvais côté au moins du dispositif de coupe (4) sur l'élément pied (2).

11. Dispositif d'échantillonnage selon une des revendications précédentes, dans lequel les passages (8) de la première pluralité de passages ont une conformation en tronc conique, et présentent un ou plusieurs, de préférence deux ou plus, très préférentiellement trois becs ou plus (152a, 152b, 152c) s'étendant vers l'intérieur.

12. Procédé d'extraction et d'échantillonnage de plantules (100) d'une plante avec un dispositif d'échantillonnage selon une des revendications précédentes 1 à 11, comprenant les étapes suivantes :
- mise à disposition ou extraction de plantules (100), de préférence issues de graines (101);
- attente jusqu'à ce que les plantules (100) s'étendent à travers la première et aussi à travers la deuxième pluralité de passages (8, 12) ;
- insertion de la lame (14) entre la partie inférieure de planche à découper (6) et la partie supérieure de planche à découper (10) pour sectionner les plantules (100) au-dessus de la racine (104) ou déplacement de la partie supérieure de planche à découper (10) par rapport à la partie inférieure de planche à découper (6) pour sectionner les plantules (100) au-dessus de la racine (104);
- réception des pousses sectionnées (102) ou de partie de pousses des plantules (100) respectivement dans un contenant récepteur (20) ; et
- retrait des contenants récepteurs (20) du dispositif d'échantillonnage (1),
le péricarpe des plantules ou des parties de celui-ci étant raclé en dessous de la lame (14).

13. Procédé selon la revendication 12, dans lequel la plante est sélectionnée parmi les variétés : Hordeum, Sorghum, Saccharum, Zea, Setaria, Oryza, Triticum, Secale, Triticale, Malus, Brachypodium, Aegilops, Daucus, Beta, Eucalyptus, Nicotiana, Solanum, Coffea, Vitis, Erythrante, Genlisea, Cucumis, Marus, Arabidopsis, Crucihimalaya, Cardamine, Lepidium, Capsella, Olmarabidopsis, Arabis, Brassica, Eruca, Raphanus, Citrus, Jatropha, Populus, Medicago, Cicer, Cajanus, Phaseolus, Glycine, Gossypium, Astragalus, Lotus, Torenia, Allium, et/ou Helianthus, la plante étant de préférence sélectionnée parmi les espèces : *Hordeum vulgare, Hordeum bulbusom, Sorghum bicolor, Saccharum officinarium, Zea* spp., comprenant *Zea mays, Setaria italica, Oryza minuta, Oryza sativa, Oryza australiensis, Oryza alta, Triticum aestivum, Triticum durum, Secale cereale,* Triticale, *Malus domestica, Brachypodium distachyon, Hordeum marinum, Aegilops tauschii, Daucus glochidiatus, Beta* spp., comprenant *Beta vulgaris, Daucus pusillus, Daucus muricatus, Daucus carota, Eucalyptus grandis, Nicotiana sylvestris, Nicotiana tomentosiformis, Nicotiana tabacum, Nicotiana benthamiana, Solanum lycopersicum, Solanum tuberosum, Coffea canephora, Vitis vinifera, Erythrante guttata, Genlisea aurea, Cucumis sativus, Marus notabilis, Arabidopsis arenosa, Arabidopsis lyrata, Arabidopsis thaliana, Crucihimalaya himalaica, Crucihimalaya wallichii, Cardamine nexuosa, Lepidium virginicum, Capsella bursa pastoris, Olmarabidopsis pumila, Arabis hirsute, Brassica napus, Brassica oleracea, Brassica rapa, Raphanus sativus, Brassica juncacea, Brassica nigra, Eruca vesicaria subsp. sativa, Citrus sinensis, Jatropha curcas, Populus trichocarpa, Medicago truncatula, Cicer yamashitae, Cicer bijugum, Cicer arietinum, Cicer reticulatum, Cicer judaicum,* Ca*janus cajanifolius, Cajanus scarabaeoides, Phaseolus vulgaris, Glycine max,* Gos*sypium* sp., *Astragalus sinicus, Lotus japonicas, Torenia fournieri, Allium cepa, Allium fistulosum, Allium sativum, Helianthus annuus, Helianthus tuberosus et*/*ou Allium tuberosum,* étant particulièrement privilégiés *Beta vulgaris, Zea mays, Triticum aestivum, Hordeum vulgare, Secale cereale, Helianthus annuus, Solanum tuberosum, Sorghum bicolor, Brassica rapa, Brassica napus, Brassica juncacea, Brassica oleracea, Raphanus sativus, Oryza sativa, Glycine max* et/ou *Gossypium* sp.
